# EUROPEAN PATENT APPLICATION

(11) **EP 1 424 786 A1**
(43) Date of publication of application: **02.06.2004**
(21) Application number: 03730558.8
(22) Date of filing: 22.05.2003
(51) Int. Cl.: H04B 1/707, H04Q 7/38

(54) **RECEPTION DEVICE AND RECEPTION METHOD**

(30) Priority: 23.05.2002 JP 2002149740; 06.09.2002 JP 2002260851
(71) Applicant: MATSUSHITA ELECTRIC INDUSTRIAL CO., LTD., Kadoma-shi, Osaka 571-8501 (JP)
(72) Inventor: TAKAHASHI, Hideyuki, Yokosuka-shi, Kanagawa 239-0841 (JP); HIRAMATSU, Katsuhiko, Yokosuka-shi, Kanagawa 238-0031 (JP); SETO, Yoshitaka, Kanagawa 224-054 (JP); NAKA, Katsuyoshi, Yokosuka-shi, Kanagawa 239-0807 (JP)
(74) Representative: Grünecker, Kinkeldey, Stockmair & Schwanhäusser Anwaltssozietät
(86) International application number: PCT/JP2003/006368
(87) International publication number: WO 2003/101003

(57) **Abstract**

The radio reception section 1102 receives a received signal whose band has been restricted using a filter. The delay profile creation section 1104 creates continuous delay profiles for every midamble shift. The distortion component creation section 1106 creates start path distortion components by multiplying the power value of the start sample of each midamble shift by a coefficient of the filter. The removing section 1107 removes the start path distortion components of the following midamble shift from predetermined samples behind the delay profile of each midamble shift. The path selection section 1108 selects samples whose power value is equal to or greater than a threshold as paths from the delay profile with the start path distortion components removed as paths.

## Description

### Technical Field

The present invention is applicable to reception processing compliant with standards for next-generation cellular phones adopted in China such as a TD-SCDMA scheme or TD-CDMA scheme (both are schemes also called "CDMA-TDD schemes").

### Background Art

In a digital mobile communication system, a received signal includes not only signals for the own station but also signals for other stations which are superimposed as interference components, and therefore it is necessary to remove these interference components. For this reason, a communication terminal apparatus is generally provided with an interference cancellation apparatus.

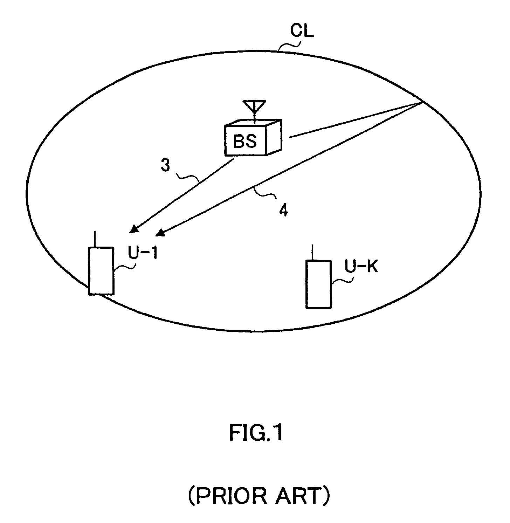

FIG. 1 shows a schematic view of a mobile communication system using a communication terminal apparatus provided with an interference cancellation apparatus. In a conventional mobile communication system shown in FIG. 1, a base station BS performs radio communications with K communication terminals (FIG. 1 shows only communication terminal U-1 and communication terminal U-K) in a cell CL. These communication terminals U-1 to U-K are each provided with an interference cancellation apparatus.

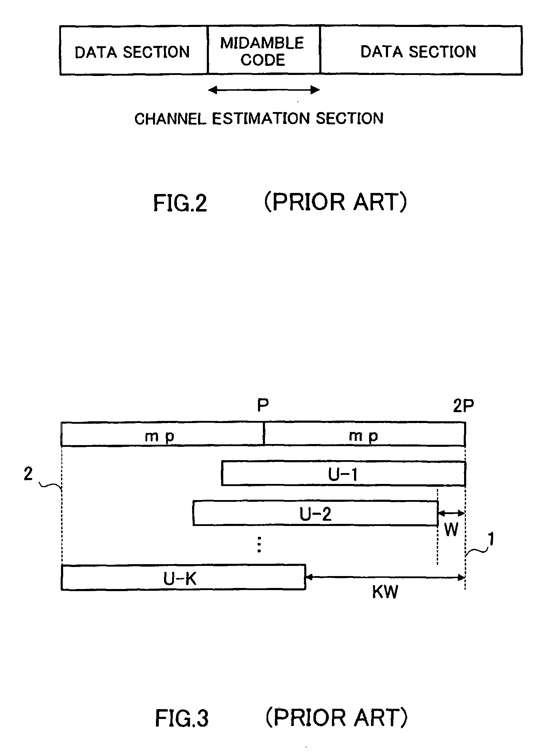

As shown in FIG.2, the base station BS transmits an information signal (data section in the figure) spread with a channelisation code which is specific to each communication terminal and a midamble code which is specific to each communication terminal to the communication terminals U-1 to U-K. This midamble code is used to perform channel estimation of each communication terminal.

Generation of a midamble code which is specific to each communication terminal will be explained with reference to FIG.3. FIG.3 is a schematic view showing a method of generating midamble codes by the base station BS.

First, a code having a length of 2P is prepared by connecting basic midamble codes mp each having a length of P. This basic midamble code mp is a code specific to the cell CL and known to all the communication terminals U-1 to U-K in the cell CL.

Second, reference positions in the code having a length of 2P are given to the communication terminals U-1 to U-K. More specifically, the communication terminal U-1 is given a position corresponding to one end 1 in the above described code as a reference position. The communication terminal U-2 is given a position shifted by W chips (hereinafter referred to as "unit midamble shift amount") from the one end 1 toward the other end 2 as a reference position. Likewise, the communication terminal U-K is given a position shifted by (K-1) W chips from the one end 1 toward the other end 2 as a reference position.

Third, the communication terminals U-1 to U-K are given slicing positions in the above described code. That is, a position corresponding to the reference position in the above described code shifted by P+K-1 toward the other end 2 is given as a slicing position.

Finally, a midamble code having a code length of P+K-1 with the reference position and slicing position as both ends is formed for every communication terminal. In this way, specific midamble codes with different amounts of midamble shift are generated for the respective communication terminals U-1 to U-K. Actually, midamble codes are formedby cyclically shifting the cell-specific basic midamble code by a unit shift amount at a time.

With reference to FIG. 1 again, the base station BS generates midamble codes specific to the respective communication terminals U-1 to U-K as described above, multiplexes the midamble codes for the communication terminals U-1 to U-K at the same time and transmits the midamble codes to the communication terminals U-1 to U-K in the cell CL.

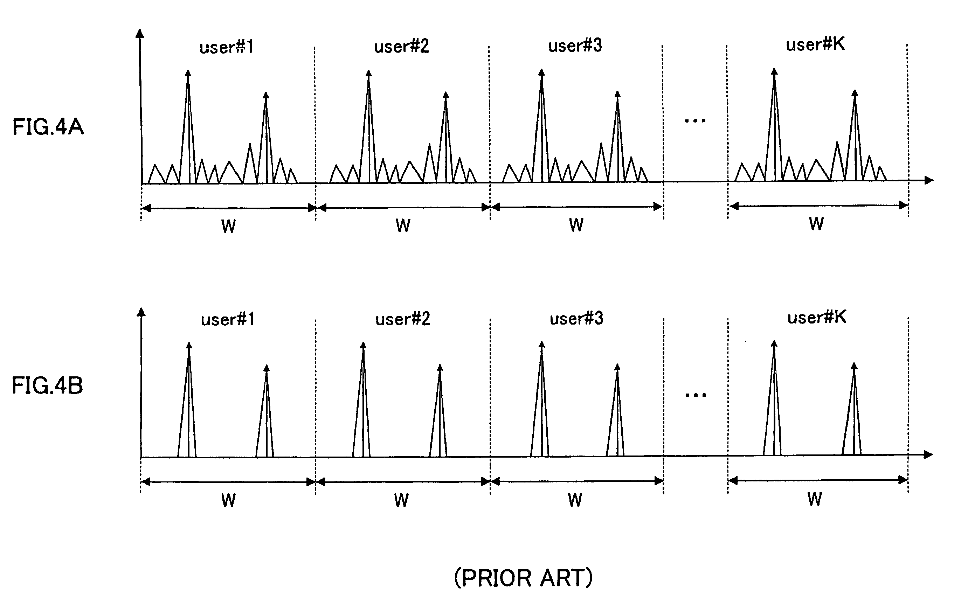

On the other hand, each communication terminal (here the communication terminal U-1 is taken as an example, but the same applies to other communication terminals) generates a delay profile shown in FIG.4A about transmission signals to all communication terminals by carrying out correlation calculations using a received signal and the aforementioned cell-specific basic midamble code mp provided beforehand.

Here, when this delay profile is delimited by detection windows (W in FIG. 4A and FIG.4B) corresponding to the unit shift amount W of the basic midamble code, peaks corresponding to paths of signals directed to the respective communication terminals appear in the respective detection windows W. That is, since the midamble code directed to each communication terminal is shifted by a unit midamble shift amount of W, delay profiles of the respective communication terminals (user #1 to user #K in the figure) appear in time sequence within the respective detection windows W.

Then, the communication terminal U-1 (user #1 in the figure) performs path limitation processing on the delay profile generated to improve the channel estimation accuracy and reduce the amount of calculation. More specifically, the communication terminal U-1 forms a delay profile as shown in FIG. 4B by removing paths whose magnitude is equal to or smaller than a threshold out of all existing paths from the delay profile generated.

In this way, the communication terminal U-1 recognizes the paths appearing in the delay profile in the detection window at the left end out of the delay profiles after the path limitation as the paths of the received signal directed to the own station. Furthermore, the communication terminal U-1 recognizes the paths appearing in the delay profile in the second detection window from the left as the paths of the received signal directed to the communication terminal user #2. Likewise, the communication terminal U-1 recognizes the paths appearing in the delay profile in the detection window at the right end as the paths directed to the communication terminal user #K. As a result, the communication terminal U-1 (user #1) can recognize paths of received signals of the respective communication terminals including the own station.

Then, the communication terminal U-1 (user #1) performs joint detection processing which is a known technology using channel estimation values of all received signals including other stations in addition to the own station and channelisation codes assigned to all communication terminals U-1 to U-K (user #1 to #K) and thereby removes received signals directed to the other stations which are interference components from the received signal.

In a mobile communication system using such midamble codes, the length of the unit midamble shift amount of W which becomes a source for identifying each communication terminal shown in FIG.3 is set as follows.

With reference to FIG. 1, for example, the signal directed to the communication terminal U-1 not only reaches the communication terminal U-1 through path 3 but also reaches the communication terminal U-1 through path 4 (assuming that it is reflected at the end of the cell CL in the figure) . Based on this premise, the length of the unit midamble shift amount of W is set in such a way that it is longer than the length corresponding to a maximum delay time of transmission signals directed to the respective communication terminals U-1 to U-K. The maximum delay time corresponds to the time until a signal sent by the base station BS reaches a communication terminal and is the time determined based on the radius of the cell CL.

However, in a mobile communication system, there is a possibility that paths whose delay time exceeds the time corresponding to the length of a unit midamble shift amount of W may be produced. When the delay time exceeds the unit midamble shift amount of W, it is difficult to apply exact path detection processing on the signal of each communication terminal and the quality of the signal obtained through interference cancellation processing on each communication terminal deteriorates.

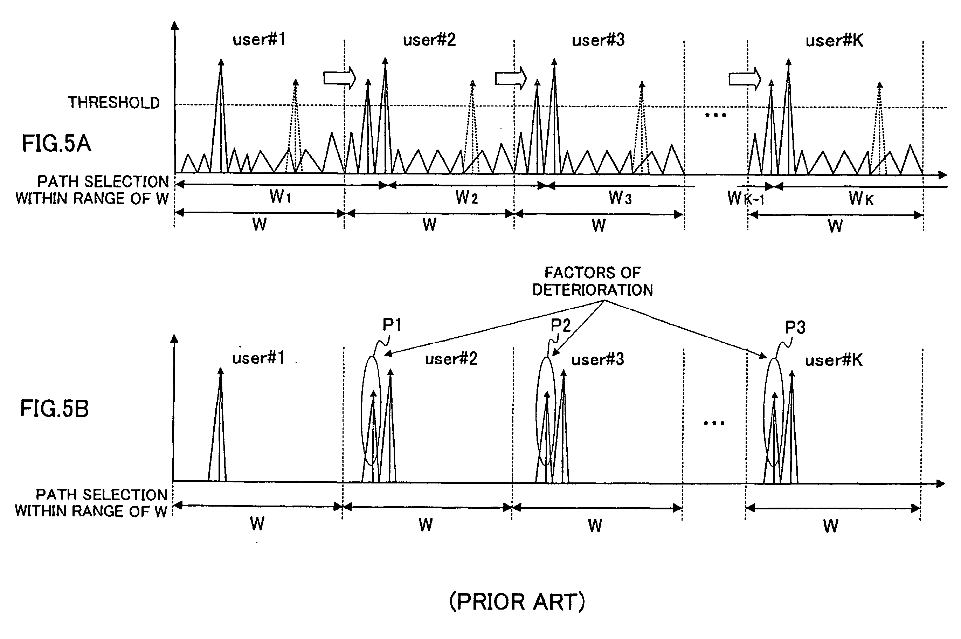

A specific example will be explained focused on the communication terminal U-1 (hereinafter described as "user #1") with reference to FIG. 5A and FIG. 5B. FIG.5A shows delay profiles generated before path limitation by a conventional communication terminal and FIG. 5B shows delay profiles after path limitation.

When the communication terminal user #1 receives a path with a delay time W1 exceeding the unit midamble shift amount of W, as shown in the figure, of the paths of signals directed to the communication terminal user #1, late paths appear within the detection window W of the communication terminal user #2 instead of the detection window W of the communication terminal user #1.

Furthermore, of the paths of signals directed to the communication terminal user #2, late paths appear within the detection window W of the communication terminal user #3 instead of the detection window W of the communication terminal user #2. Likewise, of the paths of signals directed to the communication terminal user #K-1, late paths appear within the detection window W of the communication terminal user #K instead of the detection window W of the communication terminal user #K-1.

As a result, the communication terminal user #1 mistakes path P1 which exceeds the delay time W1 out of the paths of signals directed to the own station for the path of a signal directed to the communication terminal #2. Likewise, it mistakes path P2 which is actually the path of a signal directed to the communication terminal user #2 for the path of a signal directed to the communication terminal user #3. Furthermore, it mistakes path P3 which is actually the path of a signal directed to the communication terminal user #K-1 for the path of signal directed to the communication terminal user #K.

Thereafter, the communication terminal U-1 solves equations for interference cancellation based on such mistakenly recognized path information, and cannot thereby perform interference cancellation satisfactorily. This deteriorates the quality of signals obtained through interference cancellation processing.

Moreover, when the base station BS assigns more communication terminals to one transmission time slot, that is, when it transmits signals to more communication terminals at the same time, the length of the unit midamble shift amount of W needs to be further shortened. In such a case, the possibility that paths whose delay time exceeds the unit midamble shift amount of W may occur further increases, and therefore the interference cancellation capacity at each communication terminal further reduces.

Furthermore, because of the characteristic of a reception filter, part of distorted power of the start sample of the following midamble shift may appear behind the delay profile of the preceding midamble shift. In this case, a distorted power value of the start path in a delay profile of another midamble shift appears behind the delayprofile of the ownmidamble shift. In this case, if paths are selected regarding all of them as power values in the own delay profile, path distortion components in the delay profile of the other midamble shift may be selected as the own paths, which leads to deterioration of a demodulation characteristic.

### Disclosure of Invention

It is an object of the present invention to exactly detect signal paths about each communication terminal from received midamble signals and thereby improve a reception characteristic.

This object can be attained by selecting paths after removing the start path distortion component of a delay profile of the immediately following midamble shift which appears behind a delay profile of each midamble shift.

This object can also be attained when a correlation between a plurality of midamble signals included in a received signal and a cell-specific basic midamble code provided beforehand is found and when paths of signals directed to the own station and other stations are selected based on delay profiles for the own stations and other stations which appear in time sequence, by adaptively setting the range of path selection and the way of path selection according to the delay spreading of paths of received signals.

### Brief Description of Drawings

FIG. 1 illustrates a mobile communication system;
FIG.2 illustrates a midamble code arrangement in one time slot;
FIG.3 illustrates generation of midamble codes;
FIG.4A illustrates delay profiles generated at a communication terminal and detection windows;
FIG. 4B illustrates delay profiles after path limitation processing;
FIG.5A illustrates leakage of paths into adjacent detection windows;
FIG. 5B illustrates leakage of paths into adjacent detection windows when delay profiles after path limitation processing are used;
FIG. 6 is a block diagram showing a configuration of a communication terminal apparatus according to Embodiment 1 of the present invention;
FIG. 7A illustrates adelayprofile at time slot TS#0;
FIG. 7B illustrates a delay profile at time slot TS#3;
FIG.8 illustrates paths selected by the communication terminal apparatus according to Embodiment 1;
FIG.9 illustrates a slot configuration in the embodiment;
FIG.10 is a flow chart illustrating operations of Embodiment 1;
FIG.11 is a block diagram illustrating a configuration of a communication terminal apparatus according to Embodiment 2;
FIG. 12A illustrates a delay profile at time slot TS#0;
FIG. 12B illustrates a delay profile at time slot TS#3;
FIG. 13A illustrates path selection according to Embodiment 2;
FIG.13B illustrates path selection according to Embodiment 2;
FIG. 14 is a flow chart illustrating operations of Embodiment 2;
FIG. 15A illustrates a delay profile at time slot TS#0 to explain an overview of Embodiment 3;
FIG. 15B illustrates a delay profile at time slot TS#0 to explain an overview of Embodiment 3;
FIG. 16 is a block diagram showing a configuration of a communication terminal apparatus according to Embodiment 3;
FIG.17 illustrates a situation in which ON/OFF of misoperation prevention path selection is controlled;
FIG.18 is a flow chart illustrating operations of Embodiment 3;
FIG. 19 is a block diagram showing a configuration of a communication terminal apparatus according to Embodiment 4;
FIG. 20 is a flow chart illustrating operations of Embodiment 4;
FIG. 21 is a block diagram showing a configuration of a communication terminal apparatus according to Embodiment 5;
FIG. 22 illustrates propagation paths when a control channel is transmitted without any directivity;
FIG.23 illustrates propagation paths when a communication channel is transmitted with directivity;
FIG.24 illustrates propagation paths when a communication channel is transmitted without any directivity;
FIG.25 illustrates a propagation path when a communication channel is transmitted with directivity;
FIG.26A illustrates differences in path positions between time slots and between detection windows (communication terminals) when directional transmission and directional transmission;
FIG.26B illustrates differences in path positions between time slots and between detection windows (communication terminals) in the cases of nondirectional transmission and directional transmission;
FIG.26C illustrates differences in path positions between time slots and between detection windows (communication terminals) in the cases of nondirectional transmission and directional transmission;
FIG. 27A illustrates conditions of distinguishing between nondirectional transmission and directional transmission according to Embodiment 5;
FIG. 27B illustrates conditions of distinguishing between nondirectional transmission and directional transmission according to Embodiment 5;
FIG.28 is a flow chart illustrating operations of Embodiment 5;
FIG.29 is a block diagram showing a configuration of a communication terminal apparatus according to Embodiment 6;
FIG.30A illustrates path selection by the communication terminal apparatus according to Embodiment 6;
FIG. 30B illustrates path selection by the communication terminal apparatus according to Embodiment 6;
FIG.30C illustrates path selection by the communication terminal apparatus according to Embodiment 6;
FIG. 31 is a flow chart illustrating operations of Embodiment 6;
FIG.32 illustrates a method of creating midamble shifts;
FIG.33 illustrates slots;
FIG.34 illustrates delay profiles;
FIG.35 illustrates delay profiles;
FIG. 36 is a block diagram showing a configuration of a reception apparatus according to Embodiment 7;
FIG. 37 is a flow chart illustrating operations of Embodiment 7;
FIG.38 illustrates delay profiles according to Embodiment 7;
FIG. 39 illustrates delay profiles according to Embodiment 7;
FIG.40 illustrates delay profiles according to Embodiment 7; and
FIG.41 illustrates delay profiles according to Embodiment 7.

### Best Mode for Carrying out the Invention

With reference now to the attached drawings, embodiments of the present invention will be explained in detail below.

### (Embodiment 1)

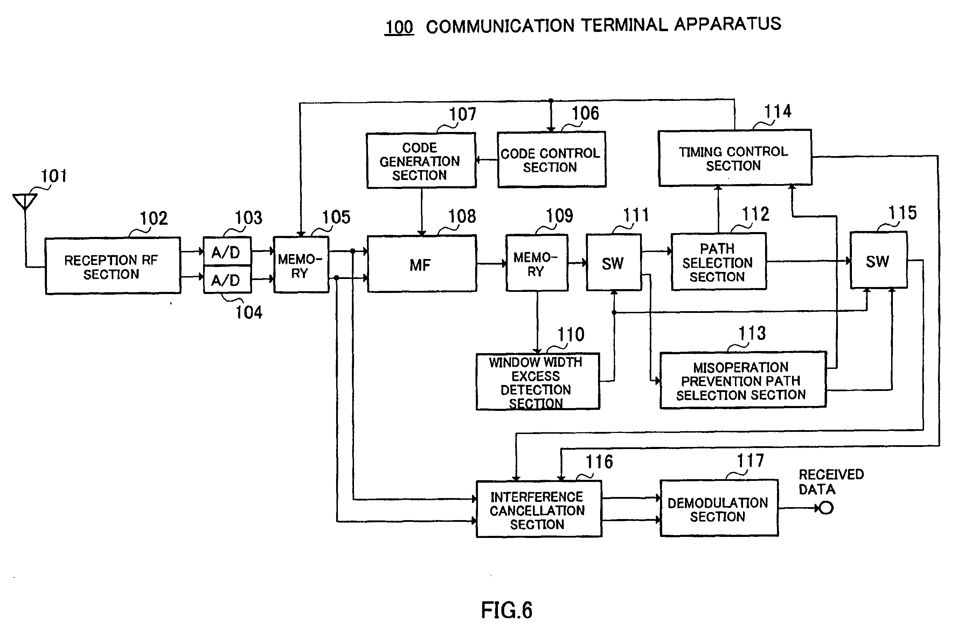

FIG.6 illustrates a configuration of a communication terminal apparatus according to Embodiment 1. A communication terminal apparatus 100 inputs a signal received by an antenna 101 to a reception RF section 102. The reception RF section 102 performs reception processing including frequency conversion, etc., on the received signal to generate Ich baseband signal (in-phase component) and Qch baseband signal (quadrature component).

An A/D converter 103 (104) performs an A/D conversion on the Ich (Qch) baseband signal to generate an Ich (Qch) digital baseband signal. A memory 105 stores the generated Ich and Qch digital baseband signals and outputs the stored digital baseband signals to a matched filter (MF) 108 and interference cancellation section 116 as delay profile generation sections based on a control signal from a timing control section 114.

The MF 108 finds a correlation between a code generated by a code generation section 107 and the received signal and generates a delay profile. The delay profile generated is stored in a memory 109.

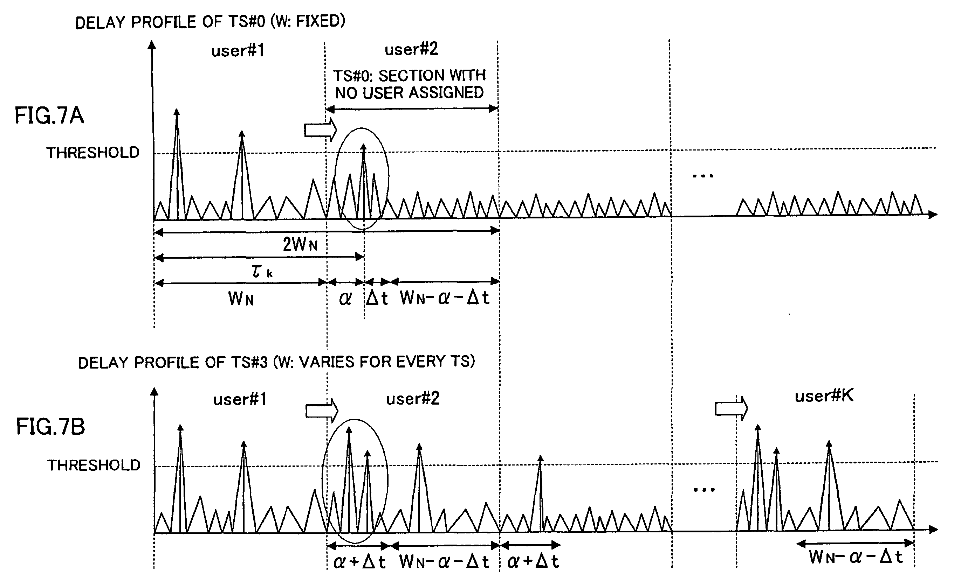

As shown in FIG.7A, a window width excess detection section 110 detects whether delay spreading τₖ falls within the range of a detection window width WN for detecting paths of each communication terminal based on the delay profiles stored in the memory 109. The window width excess detection section 110 sends a switching control signal according to the detection result to a switch (SW) 111.

More specifically, when a detection result that the delay spreading τₖ falls within the window width is obtained, the delay profile stored in the memory 109 is input to a path selection section 112 as a first path selection section through the SW 111 and when a detection result that the delay spreading τₖ does not fall within the window width WN is obtained, the delay profile stored in the memory 109 is input to a misoperation prevention path selection section 113 as a second path selection section through the SW 111.

The path selection section 112 performs normal path selection processing. That is, as shown in FIG.4A and FIG. 4B, it delimits a delay profile by detection windows W corresponding to a unit midamble shift amount of W and selects peaks of a predetermined value or above which appear in each detection window as paths of a signal directed to each communication terminal.

The path selection section 112 sends delay profile information with an area where no path is selected (that is, area where no path of the predetermined value or above has been detected) masked to 0 to an interference cancellation section 116 through a switch (SW) 115 and at the same time sends path timing information to a timing control section 114.

In contrast, the misoperation prevention path selection section 113 receives a delay profile which exceeds the detection window width from the memory 109 through the SW 111 and receives an amount of delay α by which the delay spreading exceeds the detection window from the window width excess detection section 110.

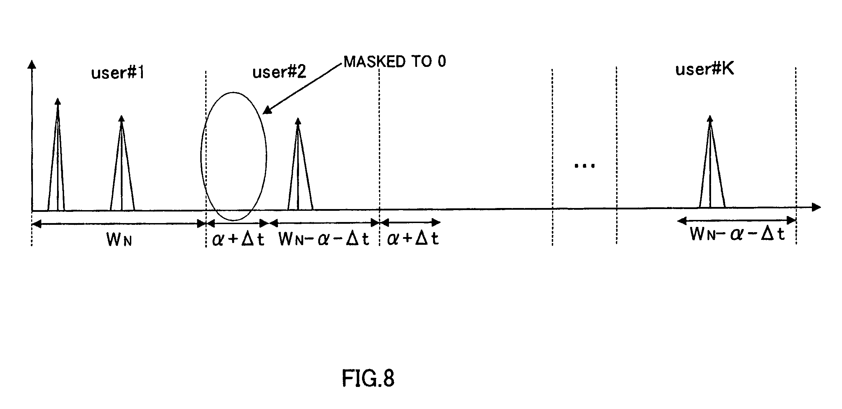

As shown in FIG.8, the misoperation prevention path selection section 113 selects peaks having a predetermined value or above as paths in the entire area of the detection window W_{N} for the communication terminal user #1, while for other communication terminals user #2 to user #K, it excludes an area (α + Δ t) from the start position of the detection window W_{N} from the path selection target area and selects peaks having the predetermined value or above as paths in the area (W_{N}-α-Δt).

When the delay spreading τₖ exceeds the detection window width W_{N} and peaks of the delay profile appears in the next detection window as shown in FIG.7A, this makes it possible to prevent these peaks from being mistakenly selected as paths of the communication terminal user #2 corresponding to the next detection window.

Δt in the figure is a margin, this embodiment excludes an area with the margin Δt added to the amount of delay α exceeding the detection window actually detected by the window width excess detection section 110 from the path selection area, and can thereby further prevent erroneous selections of paths. However, setting too large margin Δt reduces the path detection range and this should be taken into consideration when the margin Δt is selected.

Thus, the misoperation prevention path selection section 113 masks a section 0 to α + Δt of other detection windows except the first detection window to 0 unconditionally without selecting paths and masks a section α + Δt to W_{N} where no path is selected to 0. Then, the misoperation prevention path selection section 113 sends the delay profile information obtained by this to the interference cancellation section 116 through the SW 115 and sends the path timing information to the timing control section 114.

The interference cancellation section 116 receives the received signal from the memory 105 and at the same time receives path timing information from the timing control section 114 and delay profile information from the path selection section 112 or misoperation prevention path selection section 113. Then, the interference cancellation section 116 performs joint detection processing to thereby remove signals of other stations from the received signal and extract only signals directed to the own station. The joint detection processing is a known technology and therefore will not be described in detail, but can be summarized as follows:

The joint detection processing performs predetermined matrix calculations using a system matrix consisting of a matrix arrangement of results of convolutional calculations between the path detection result of each communication terminal and channelisation code assigned to each communication terminal, multiplies the data section of the received signal by the matrix calculation result to thereby remove interference and extract a modulated signal. Using the joint detection processing makes it possible to obtain signals free of interference without performing despreading or RAKE combining. The received signal from which only signals directed to the own station is extracted through the joint detection processing is converted to received data by a demodulation section 117.

Then, detailed processing of the respective sections when the communication terminal apparatus 100 is actually mounted in a mobile communication system will be explained.

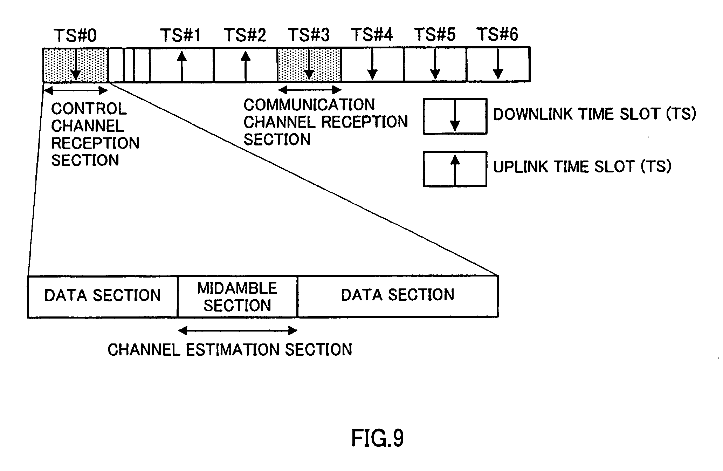

In this embodiment, a case where a communication based on a TDD (Time Division Duplex) scheme as the communication scheme is carried out will be explained. As shown in FIG.9, suppose the base station always transmits control information with a time slot TS#0 to which a control channel is assigned and transmits data with a time slot TS#3. Furthermore, suppose the time slot TS#3 also transmits a signal with a midamble signal inserted between data sections as in the case of the time slot TS#0.

However, at the time slot TS#0, in order to be able to also detect delay spreading beyond the detection window as shown in FIG.7A, when a midamble code of a control channel is assigned to, for example, a communication terminal user #1, no midamble code is assigned to user #2, the neighboring communication terminal. In contrast to this, at the time slot TS#3, a plurality of midamble codes corresponding to a plurality of communication terminals is normally multiplexed at the same time and sent.

Here, it is possible to consider that the path positions of the received signal of the time slot TS#0 and the path positions of the received signal of the time slot TS#3 are the same. This is because the time distance between the time slot TS#0 and time slot TS#3 is only several ms to several tens of ms. That is, even if a communication terminal is moving, the transmitting point is considered identical to the receiving point, and therefore the path positions determined by a propagation delay are substantially the same between the time slot TS#0 and time slot TS#3.

The delay profile of the time slot TS#0 stored in the memory 109 is as shown in FIG.7A. The time slot TS#0 is assigned a control channel which all users in the cell receive for the first time after turning on power and conducting an initial search. Based on the signal of the time slot TS#0, the communication terminal apparatus 100 acquires resources necessary for demodulation such as subsequent detection window width W_{N}, channelization code and amount of midamble code shift (user number).

The window width excess detection section 110 of the communication terminal apparatus 100 uses the time slot TS#0 which is assigned a control channel and subject to the above described constraints to estimate delay spreading of the communication channel at the next time slot TS#N (e.g., time slot TS#3).

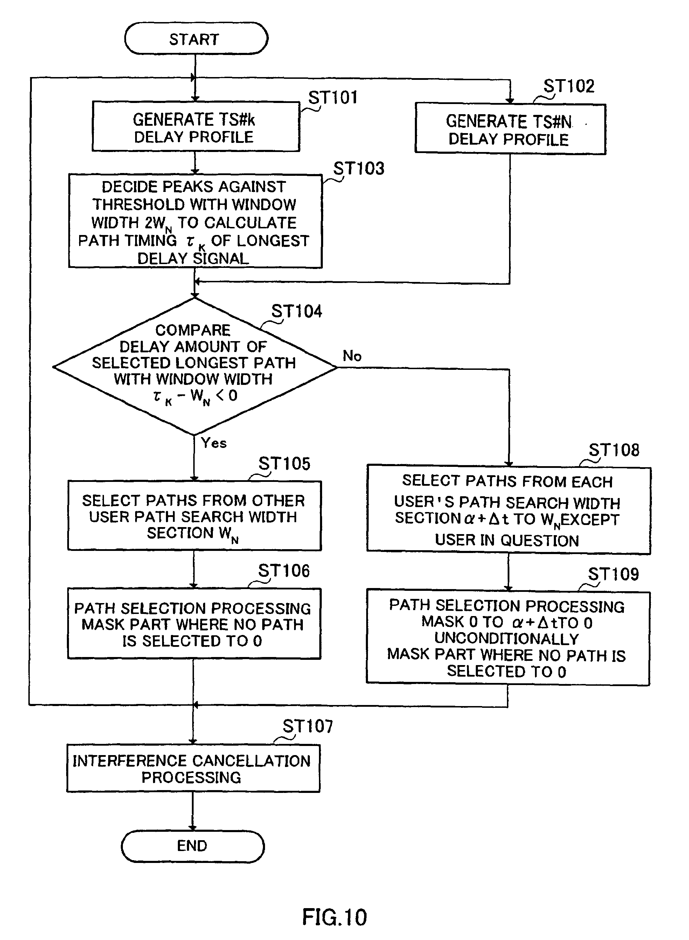

Then, the operation of the communication terminal apparatus 100 of this embodiment will be explained with reference to FIG.10. Once path selection processing is started, the communication terminal apparatus 100 moves on to step ST101 and step ST102. In ST101, the communication terminal apparatus 100 calculates a correlation value of the received signal of the time slot TS#k with a basic midamble code using the matched filter 108 and thereby generates a delay profile. Likewise in step ST102, the communication terminal apparatus 100 calculates a correlation value of the received signal of the time slot TS#N with the basic midamble code using the matched filter 108 and thereby generates a delay profile.

Here, suppose the time slot TS#k and time slot TS#N are time slots temporally so close to each other that their path positions are substantially the same. However, in order for the signal received at the time slot TS#k to be able to handle any delay spreading, suppose if a midamble code is assigned to the communication terminal user #1, no midamble code is assigned to the neighboring communication terminal user #2.

This allows the window width for detecting peaks of the delay profile of the communication terminal user #1 to be 2×W_{N} and therefore even if the delay spreading τₖ exceeds a unit midamble shift amount of W, it is possible to detect the delay spreading τₖ exactly and easily. On the other hand, suppose the signal received at the time slot TS#N is a midamble signal shifted by the unit midamble shift amount of W at a time as usual and multiplexed at the same time. The communication terminal apparatus 100 stores the delay profile generated in step ST101 and the delay profile generated in step ST102 in the memory 109.

In step ST103, the window width excess detection section 110 detects a path timing τₖ of the longest delay signal based on the delay profile generated in step ST101 . More specifically, of the peaks of the delay profile, peaks equal to or greater than a predetermined threshold are detected and of the peaks equal to or greater than the threshold, the latest peak is assumed to be the path timing τₖ of the longest delay signal.

In step ST104, the window width excess detection section 110 compares the path timing τₖ of the longest delay signal detected in step ST103 with the detection window width W_{N} (corresponds to the unit midamble shift amount of W) to thereby decide whether the delay spreading τₖ falls within the detection window width W_{N} or not.

When the delay spreading τₖ falls within the detection window width W_{N}, the communication terminal apparatus 100 acquires a positive result in step ST104 and moves on to ST105 and continues normal path selection processing thereafter. That is, first in step ST105, the communication terminal apparatus 100 outputs the delay profile stored in the memory 109 generated in step ST102 to the path selection section 112 through the SW 111.

Then, the path selection section 112 delimits the delay prof ile by detection window widths W_{N}, detects peaks equal to or greater than the threshold within each detection window W_{N} to thereby select paths of the respective communication terminals other than the own station. Then, in next step ST106, delay profile information with the parts where no paths are selected masked to 0 is sent to the interference cancellation section 116.

On the contrary, when the delay spreading τₖ exceeds the detection window W_{N}, the communication terminal apparatus 100 moves from step ST104 to step ST108. In step ST108, the delay profile generated in step ST102 and stored in the memory 109 is output to the misoperation prevention path selection section 113 through the SW 111. Then, as shown in FIG. 7B, the misoperation prevention path selection section 113 includes a small margin Δt in the amount of delay α by which the delay spreading exceeds the detection window width W_{N}, sets α + Δt as a section into which delay signals of signals directed to the neighboring communication terminal are likely to leak, sets the section α+Δt to W_{N} as a section where paths are selected through a normal threshold decision and performs pass selection in this section.

In step ST109, the section 0 to α + Δt is masked to 0 unconditionally and the part where no path is selected of the section α + Δt to W_{N} is masked to 0 and delay profile information is sent to the interference cancellation section 116 and path timing information is sent to the timing control section 114.

Furthermore, after completing the processing in step ST106 or step ST109, the communication terminal apparatus 100 moves back to step ST101 and step ST102, repeats the similar path selection processing for the received signal of the next time slot, and also moves on to step ST107 and performs interference cancellation processing using the path detection result.

In step ST107, signals directed to other stations are removed from the received signal using path information indicated in the delay profile information input from the interference cancellation section 116 and only signals directed to the own station are extracted. Then, the communication terminal 100 completes the processing in step ST107.

According to the above described configuration, the windowwidth excess detection section 110 detects whether the delay spreading of the received signal exceeds the detection window or not, and when the delay spreading exceeds the detection window, it detects the amount of delay α and provides an area α + Δt where no path is selected according to the amount of delay α by which delay spreading exceeds the detection window, and in this way when the delay spreading is large, it is possible to prevent peaks of signals directed to communication terminals which enter the neighboring detection window and are not to be detected in the detection window from being mistakenly selected as paths of signals directed to the communication terminals to be detected by the detection window. As a result, it is possible to exactly detect paths of signals directed to the respective communication terminals. This makes it possible to perform interference cancellation satisfactorily and thereby obtain received signals of high quality directed to the own station.

For example, even when the station arrangement is not designed strictly and paths may leak from neighboring communication terminals beyond the detection window width, it is possible to perform interference cancellation stably and construct a stable system.

### (Embodiment 2)

Above described Embodiment 1 has described the case where when delay spreading τₖ exceeds the detection window width W_{N}, the part that exceeds the detection window W_{N} (section 0 to α + Δt) is masked to 0 and paths are not selected in this part. However, this embodiment proposes a communication terminal apparatus which can select paths in this part.

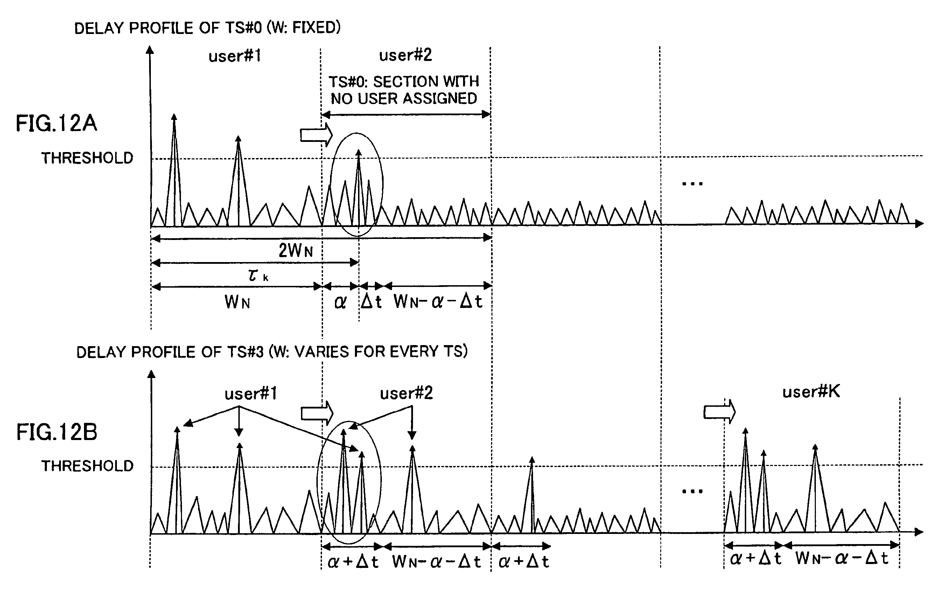

That is, the present inventor et al. have considered that unconditionally masking the part that exceeds the detection window W_{N} (section 0 to α + Δt) reduces a path diversity effect when as shown in, for example, FIG.12B, paths of the communication terminal user #2 are included in the section 0 to α + Δt and the signal quality after interference cancellation would deteriorate accordingly compared to the case where all paths are exactly detected. Thus, instead of unconditionally masking the section 0 to α + Δt to 0 as in the case of Embodiment 1, this embodiment makes it possible to actually decide whether the paths are paths of signals directed to the communication terminal user #2 or not.

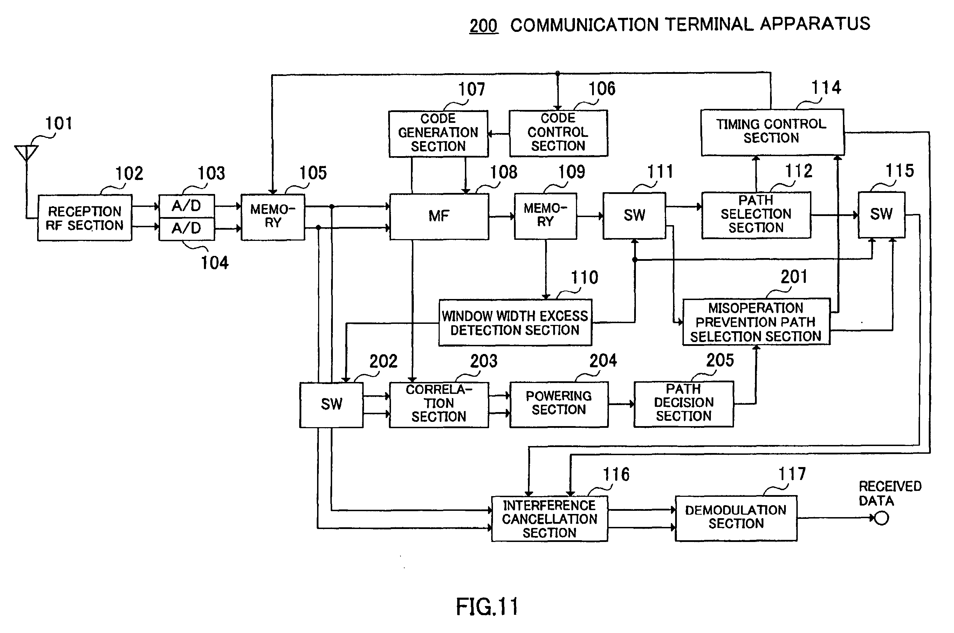

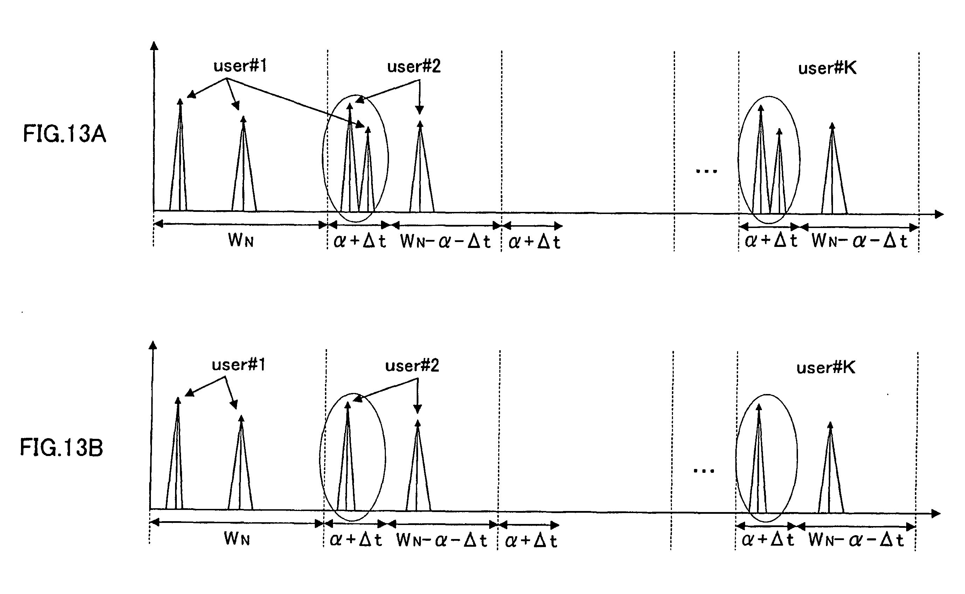

FIG. 11 in which the parts corresponding to those in FIG.6 are shown with the same reference numerals assigned shows a configuration a communication terminal apparatus 200 according to Embodiment 2 of the present invention. A misoperation prevention path selection section 201 of the communication terminal apparatus 200 also performs path selection in a section 0 to α + Δt as shown in FIG.13A and FIG. 13B and sends path timing information to a timing control section 114. In this case, the misoperation prevention path selection section 201 also sends information on (α + Δt) in addition to the timing of detected paths as path timing information.

The timing control section 114 sends timing signals showing timings of paths appearing in the section 0 to α + Δt to a code control section 106. The code control section 106 sends a control signal for generating scrambling codes and channelization codes used as channelisation codes of data sections of a communication terminal user #2 to a code generation section 107 in synchronization with the timings of paths appearing in the section 0 to α + Δt. At the same time, the window width excess detection section 110 changes a switch (SW) 202 to the correlation section 203 side.

As a result, the correlation section 202 carries out a correlation calculation between data sections of the communication terminal user #2 and channelisation codes of these data sections for every path timing of the section 0 to α+Δt. That is, the data sections of the communication terminal user #2 are subjected to despreading processing. A powering section 204 converts correlation values using the output of the correlation section 203. A path decision section 205 decides correlation power against a threshold and when the correlation power exceeds the threshold, this path is decided to be appropriate as a path selected by the detection window to be processed.

That is, when the timings at which paths are detected by a delay profile of a midamble code are actually path timings of signals directed to the communication terminal, signal levels equal to or greater than a predetermined value must be obtained by despreading the data sections using scrambling code and channelization code at the detected timings.

On the other hand, the timings at which paths are detected by the delay profile of the midamble code are actually not path timings of signals directed to the communication terminal, it is not possible to obtain signal levels equal to or greater than the predetermined value when the data sections are despread using the scrambling code and channelization code at the detected timings.

This embodiment decides whether peaks equal to or greater than a predetermined value appearing in the section 0 to α + Δt are appropriate as the paths to be selected within the detection window or not using this relationship.

The path timing information decided by the path decision section 205 to be appropriate paths is sent to the misoperation prevention path selection section 201. The misoperation path selection section 201 masks to 0 paths other than the paths decided by the path decision section 205 to be appropriate out of a plurality of paths detected in the section 0 to α + Δt based on the path timing information input from the path decision section 205. This makes it possible to select only paths of the communication terminal user #2 which are the detection targets from the section 0 to α + Δt into which paths of signals directed to other communication terminals have leaked as shown in FIG.13B.

The communication terminal apparatus 200 performs this processing on all communication terminal users #2 to #K which are interference targets, outputs delay profile information with all parts other than path positions masked to an interference cancellation section 116 and carries out interference cancellation. If a default midamble code is used as the midamble codes, it is possible to easily specify channelization codes of other stations based on the midamble codes.

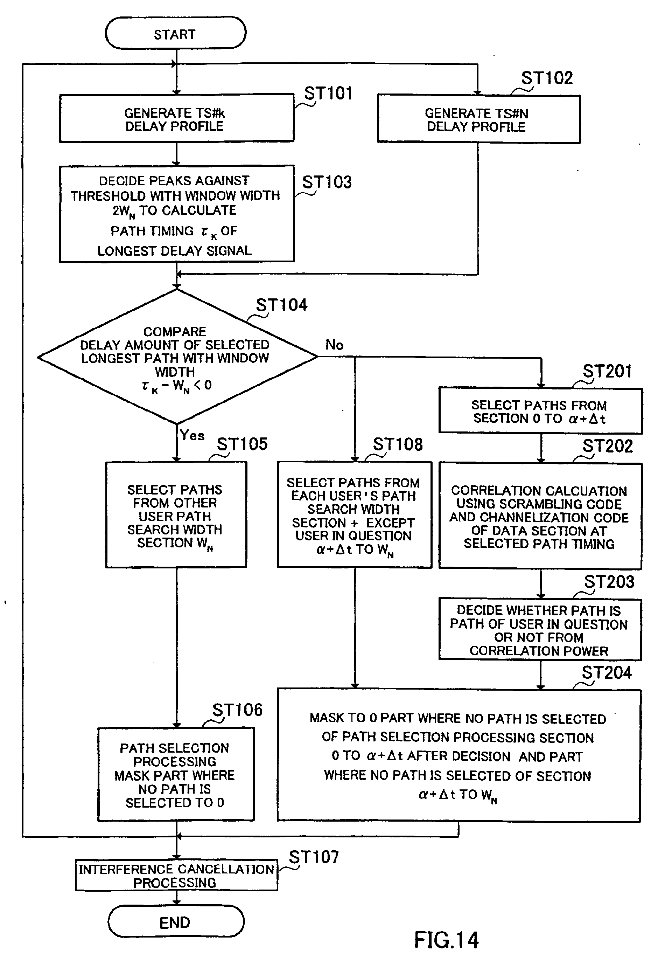

Then, operations of the communication terminal apparatus 200 will be explained using FIG.14. In FIG.14 which shows the corresponding sections in FIG.10 with the same reference numerals assigned, when the communication terminal apparatus 200 of this embodiment decides in step ST104 that the delay spreading has exceeded the detection window width W_{N}, it moves on to step ST108 and step ST201. In step ST108, paths are selected in an area (α + Δt to W_{N}) of the detection windows 0 to W_{N} where there is no influence of the delay spreading.

On the contrary, in step ST201, paths are selected in an area (0 to α + Δt) where there is an influence of the delay spreading in the detection windows 0 to W_{N}. There is a high possibility that paths selected in this step ST201 may include paths of signals directed to other stations which have leaked from the adjacent detection window. Therefore, in step ST202, correlation calculation processing (despreading processing) of the data sections is performed using the scrambling code and channelization code of the communication terminal which is the current path detection target at the path timings selected in step ST201.

In step ST203, correlation power is compared with a predetermined threshold to select paths of the communication terminal which are current path detection targets out of paths selected in step ST201. That is, only paths whose correlation power is greater than the threshold are selected.

In step ST204, the part of the delay profile in which no path has been selected in step ST203 and the part in which no path has been selected in step 108 are masked to 0.

In this way, the communication terminal apparatus 200 can decide whether the selected paths are appropriate paths or not even if paths of signals directed to other communication terminals which have leaked into the adjacent detection windows are mistakenly selected as paths of signals directed to the communication terminal which is the detection target within the detection window.

According to the above described configuration, not only by path selection using midamble codes but also by despreading data sections using channelization codes again to decide the validity of the paths selected using midamble codes to thereby select the final paths, it is possible to avoid selections of wrong paths even when delay spreading is large.

Furthermore, not only through path selection using midamble codes but also by performing processing such as despreading data sections using channelization codes again to decide the validity of paths selected using midamble codes and thereby selecting the final paths on the area 0 to α*+*Δt in which there is a high possibility that other paths may appear within the detection window, it is possible to perform processing focused on areas where there is substantially a high possibility that wrong paths may be selected, and thereby reduce an amount of processing and perform efficient and exact path detection processing.

Furthermore, it is also possible to increase the number of detectable paths in addition to the effects of Embodiment 1. As a result, it is possible to improve the quality of signals after interference cancellation without reducing the path diversity effect.

### (Embodiment 3)

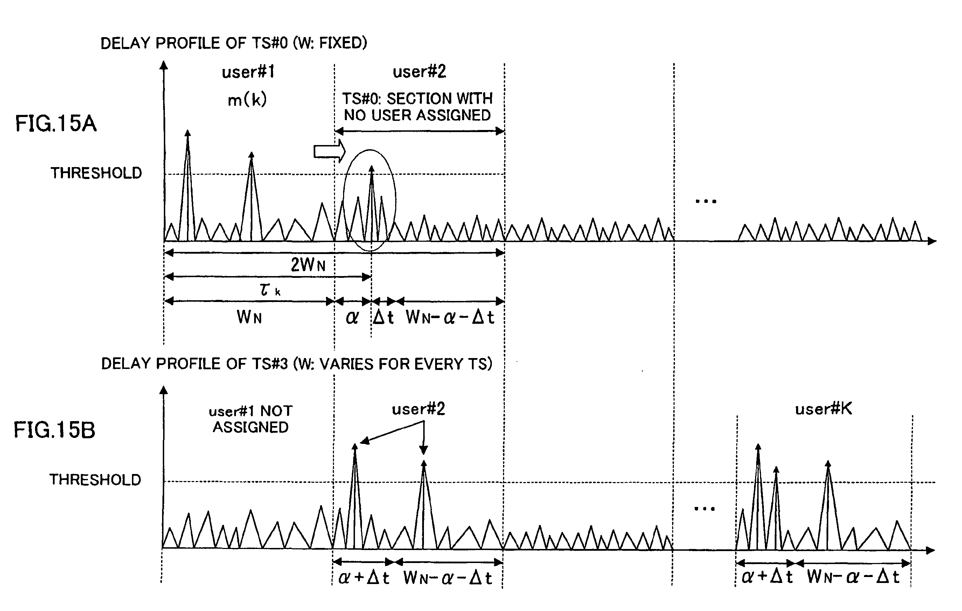

Above described Embodiment 1 has described the case as shown in FIG. 15A where when delay spreading τₖ detected at the time slot TS#0 exceeds the detection window width W_{N}, the part which exceeds the detection window is masked to 0 to thereby avoid path selection in this part, but this embodiment proposes a communication terminal apparatus which does not avoid path selection unconditionally for the section (0 to α+ Δt) which exceeds the detection window but applies, as shown in FIG. 15B, no mask processing to the section (0 to α + Δt) when midamble codes to be detected in the adjacent window are not assigned and selects no paths for the section (0 to α + Δt) which exceeds the detection window when midamble codes to be detected within the adjacent detection window are assigned.

That is, when delay spreading τₖ which exceeds the window width W_{N} of the detection window is detected at the time slot TS#0, Embodiment 1 masks the area (α+ Δt) beyond the detection window W_{N} to 0 unconditionally. However, it has also been considered that when midamble codes shiftedby a unit midamble shift amount to be detected in the adjacent detection window are not used (that is, there is no communication terminal corresponding to the adjacent detection window), the paths directed to the adjacent communication terminal does not leak into the detection window which is the detection target, and therefore it would be possible to perform exact path selection without masking the area (α + Δt) which exceeds the detection window to 0 and excluding it from the detection area and avoid the reduction of the path diversity effect.

Furthermore, Embodiment 2 has calculated the despreading delay value of the data section in the area (α + Δt) where delay spreading exceeds the detection window for all K communication terminals, but, when there is no communication terminal corresponding to the adjacent detection window, no paths leak in from the adjacent detection window, and therefore it has also been considered that it would be possible to simply select paths appearing within the detection window and thereby reduce the amount of processing.

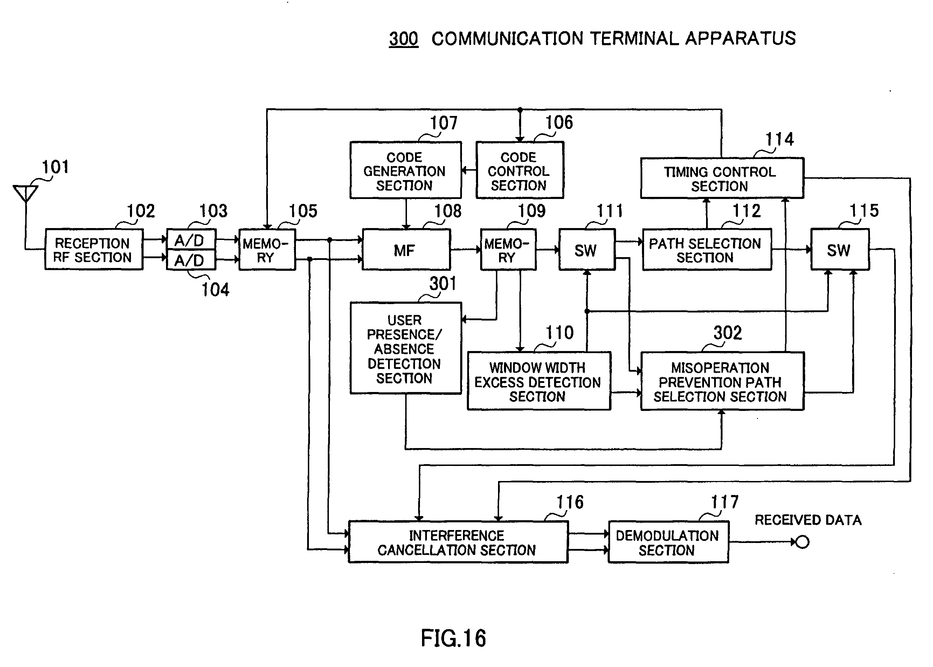

FIG.16 in which the parts corresponding to those in FIG.6 are shown with the same reference numerals assigned shows a configuration a communication terminal apparatus 300 according to Embodiment 3 of the present invention. The communication terminal apparatus 300 includes a user presence/absence detection section 301. The user presence/absence detection section 301 decides delay profiles stored in a memory 109 against a threshold and thereby detects the presence/absence of a communication terminal subject to interference assigned within a certain time slot (e.g., time slot TS#3).

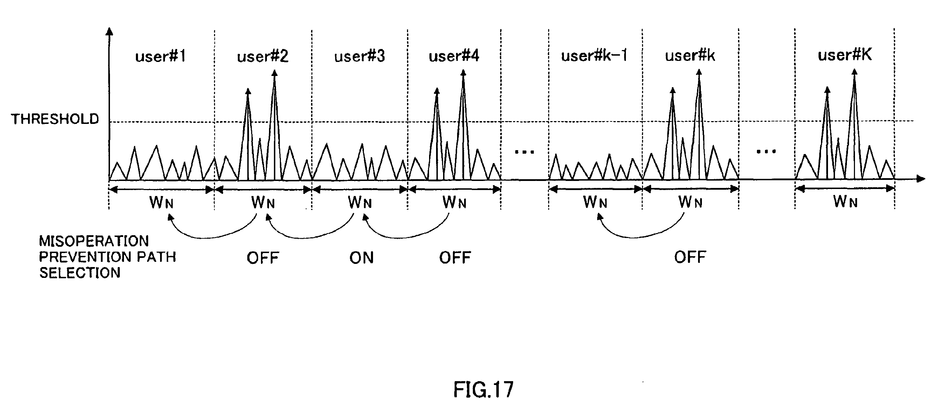

In this case, as shown in FIG.17, when the current communication terminal to be detected is assumed to be user #k, the user presence/absence detection section 301 decides whether the adjacent user k-1 (k=2, 3, ··· , K, k=K when k=1) is assigned or not, that is, it decides the presence/absence of the adjacent communication terminal user #k-1. Here, the "adjacent communication terminal" refers to a communication terminal assigned to the detection window temporally immediately preceding the detection window which is the current detection processing target. This processing is performed by detecting whether there is any peak equal to or exceeding a threshold within the adjacent detection window or not.

Here, it is detected whether there is any communication terminal assigned to the adjacent detection window based on delay profiles of midamble codes, but the present invention is not limited to this and it is also possible to perform this detection by deciding, for example, channelization codes or based on information from the base station.

When the adjacent communication terminal user #k-1 exists, the delay signal of the communication terminal user #k-1 may leak into the detection window of the communication terminal user #k which is the current processing target, and therefore only in that case, the user presence/absence detection section 301 instructs the misoperation prevention path selection section 302 to mask the delay profile in the section 0 to α + Δt to 0 (that is, no path selection is performed in the section 0 to α+Δt).

On the contrary, when the user presence/absence detection section 301 receives a detection result that there is no adjacent communication terminal user #k-1, it instructs the misoperation prevention path selection section 302 to stop mask processing on the delay profile in the section 0 to α + Δt.

FIG.17 shows the processing of the misoperation prevention path selection section 302 in this embodiment. When the current path detection target is the communication terminal user #2, the adjacent communication terminal user #1 does not exist, and therefore the misoperation prevention path selection section 302 controls the mask processing of the delay profile in the section 0 to α + Δt to OFF. Furthermore, it is when the communication terminal user #k-1 is assigned that the misoperation prevention path selection processing is controlled to ON in the detection section of the communication terminal user #k.

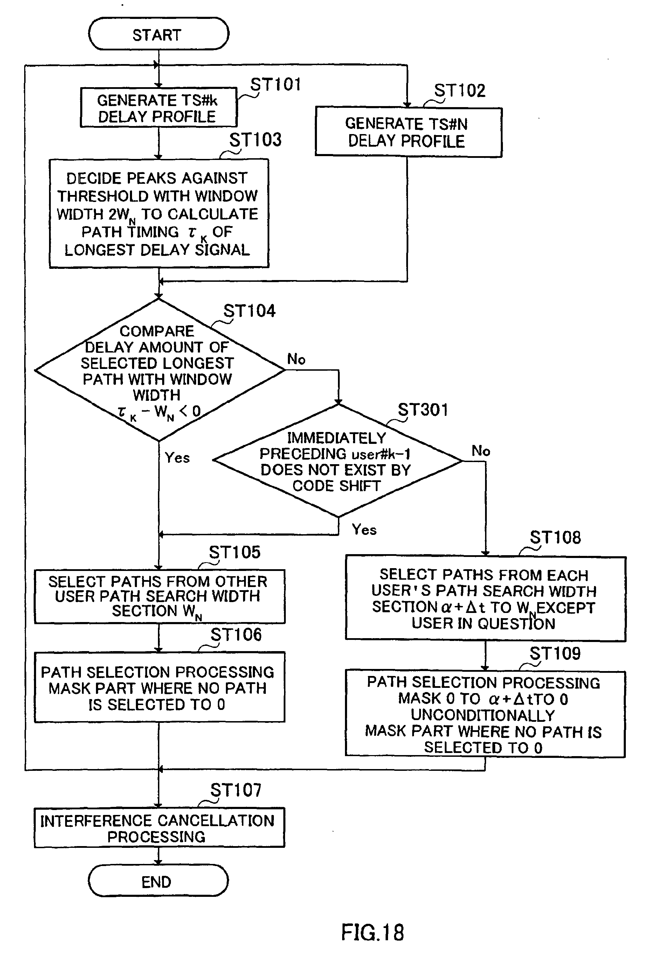

Then, operations of the communication terminal apparatus 300 of this embodiment will be explained using FIG. 18. In FIG.18 in which the parts corresponding to those in FIG. 10 are shown with the same reference numerals assigned, when the communication terminal apparatus 300 of this embodiment decides in step ST104 that the delay spreading τₖ exceeds the detection window width W_{N}, it moves on to step ST301. In step ST301, the user presence/absence detection section 301 detects whether the immediately preceding communication terminal user #k-1 exists or not by a code shift and when it does not exist, the user presence/absence detection section 301 moves on to step ST105 and the misoperation prevention path selection section 302 selects paths in the entire area within the detection window without performing any mask processing in the section α + Δt of the delay profile.

On the contrary, when it is decided in step ST301 that the immediately preceding communication terminal user #k-1 exists by a code shift, the misoperation prevention path selection section 302 performs mask processing on the section 0 to α + Δt of the delay profile by carrying out step ST108 and step ST109 and selects only paths within the range of α+Δt to W_{N}.

According to the above described configuration, the window width excess detection section 110 detects whether the delay spreading of the received signal exceeds the detection window or not and when the delay spreading exceeds the detection window, the window width excess detection section 110 detects the amount of delay α, provides the area α + Δt where path selection is not performed according to the amount of delay α of the delay spreading exceeding the detection window, and if the communication terminal is not assigned to the immediately preceding detection window, the path selection processing is performed in the entire area within the detection window without providing any area where no path selection is performed, and in this way it is possible to exactly detect paths of the respective communication terminals without reducing the path diversity effect in addition to the effects of Embodiment 1. Moreover, compared to Embodiment 2, it is possible to reduce the amount of processing of path detection.

### (Embodiment 4)

The communication terminal of this embodiment combines the configuration of the characteristic part of above described Embodiment 2 and the configuration of the characteristic part of Embodiment 3. This makes it possible to realize a communication terminal apparatus combining the effect of being able to exactly identify paths to be detected even if peaks of delay profiles appearing in the adjacent detection window leak in, which is the advantage of Embodiment 2 and the effect of being able to reduce the amount of processing of path selection according to the situation of assignment of users even if delay spreading is large to a certain extent, which is the advantage of Embodiment 3.

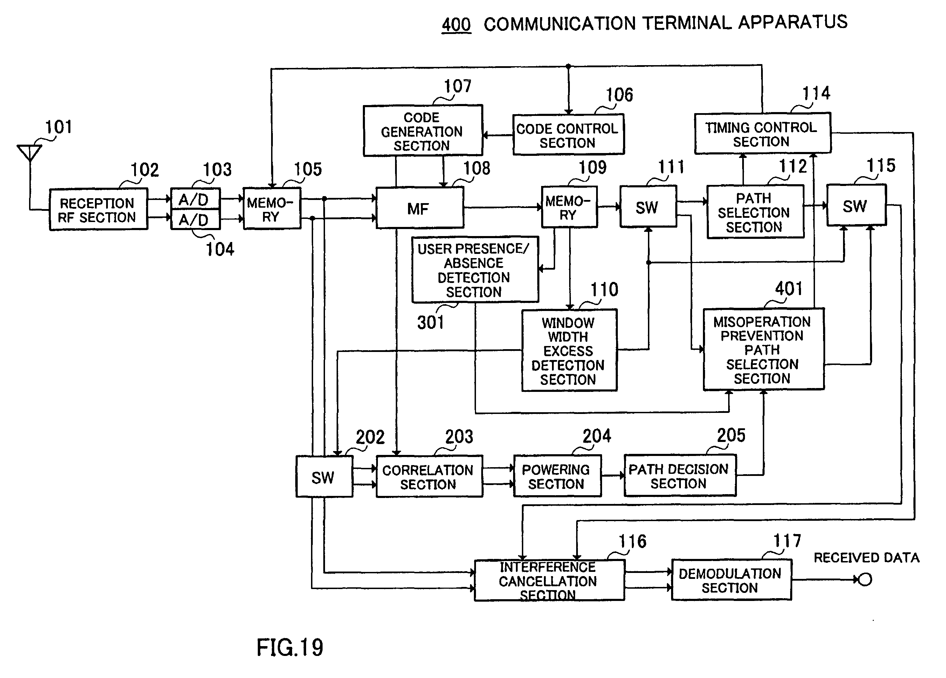

FIG. 19 in which the parts corresponding to those in FIG. 11 and FIG.16 are shown with the same reference numerals assigned shows a configuration of a communication terminal apparatus 400 according to Embodiment 4 of the present invention. As is apparent from FIG.19, the communication terminal apparatus 400 has a configuration combining the communication terminal apparatus 200 of Embodiment 2 and the configuration of the communication terminal 300 of Embodiment 3.

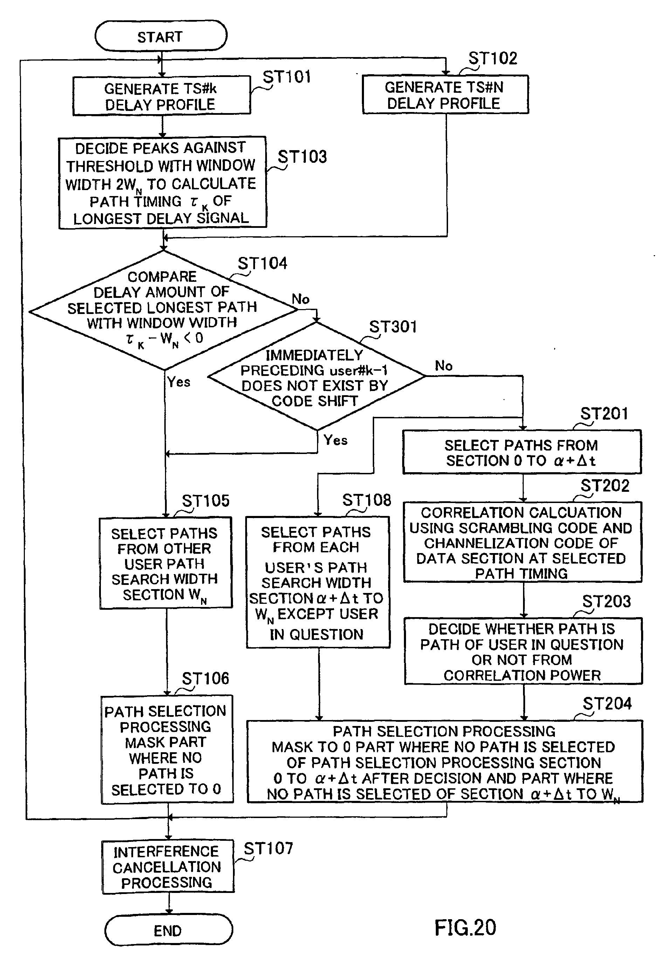

Using FIG.20 in which the parts corresponding to the parts in FIG.14 and FIG.18 are shown with the same reference numerals assigned, operations of the communication terminal apparatus 400 will be explained. When the communication terminal apparatus 400 decides in step ST104 through an extra window detection section 110 that delay spreading τₖ exceeds the detection window width W_{N}, it moves on to step ST301. In step ST301, a user presence/absence detection section 301 detects whether an immediately preceding communication terminal user #k-1 exists or not by a code shift, and if the immediately preceding communication terminal user #k-1 does not exist, the communication terminal apparatus 400 moves on to step ST105 and a misoperation prevention path selection section 401 selects the entire area within the detection window without performing mask processing on the section α + Δt of a delay profile.

On the contrary, in step ST301, when the user presence/absence detection section 301 decides that the immediately preceding communication terminal user #k-1 exists by a code shift, the communication terminal apparatus 400 moves on to step ST108 and step ST201.

In step ST108, the misoperation prevention path selection section 401 selects paths in an area α + Δt to W_{N} where there is no influence of delay spreading in the detection window 0 to W_{N}. On the other hand, in step ST201 to ST203, the misoperation prevention path selection section selects paths in an area 0 to α + Δt where there is an influence of delay spreading in the detection window 0 to W_{N}. In this case, the data sections are subjected to despreading processing using scrambling codes and channelization codes at path timings selected in the section 0 to α + Δt by midamble codes, and it is thereby detected whether the paths are paths of the communication terminal which is the current path selection target or not.

Then, in step ST204, the part of the delay profile in which no path has been selected in step ST203 and the part in which no path has been selected in step ST108 are masked to 0.

According to the above described configuration, it is selected whether specific processing (misoperation prevention path selection processing) should be performed or not on the area 0 to α + Δt into which paths due to delay spreading may leak depending on whether a communication terminal (user) is assigned to the immediately preceding detection window or not and path selection is performed using the delay profiles of midamble codes and the result of despreading of data sections in the area 0 to α + Δt into which paths may leak when a communication terminal is assigned to the immediately preceding detection window, and therefore it is possible to reduce the amount of processing of path selection without reducing the path diversity effect.

### (Embodiment 5)

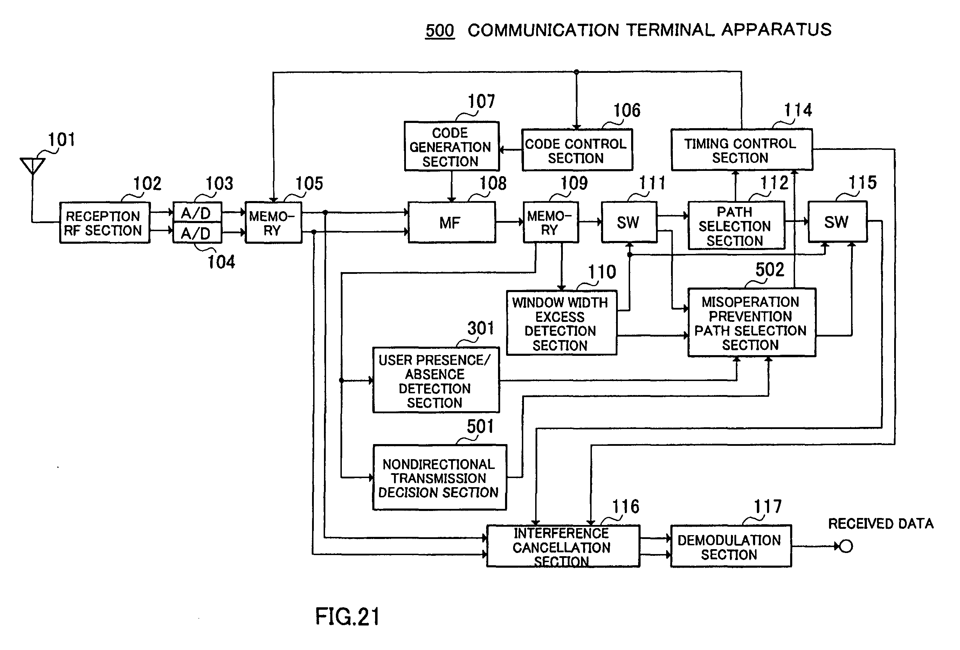

FIG. 21 in which the parts corresponding to the parts in FIG. 16 explained in Embodiment 3 shows a configuration of a communication terminal apparatus 500 according to Embodiment 5. The communication terminal apparatus 500 has the same configuration as that of the communication terminal apparatus 300 of Embodiment 3 except in that it includes a nondirectional transmission decision section 501.

Before describing details of the configuration of the communication terminal apparatus 500, the process through which the communication terminal apparatus 500 of this embodiment has come to be proposed will be explained. This embodiment has focused on the fact that the path positions of time slots (time slot TS#0 in this embodiment) to which control channels are assigned differ from the path positions of time slots (time slot TS#3 in this embodiment) to which communication channels are assigned depending on the transmission method of the base station.

In actuality, it is when communication channels are transmitted with directivity that the path positions of the time slots to which control channels are assigned differ from the path positions of the time slots to which communication channels are assigned.

Therefore, this embodiment provides the communication terminal apparatus 500 with the nondirectional transmission decision section 501 that decides whether communication channels are sent without directivity or not and changes the processing of a misoperation prevention path selection section 502 according to the decision result.

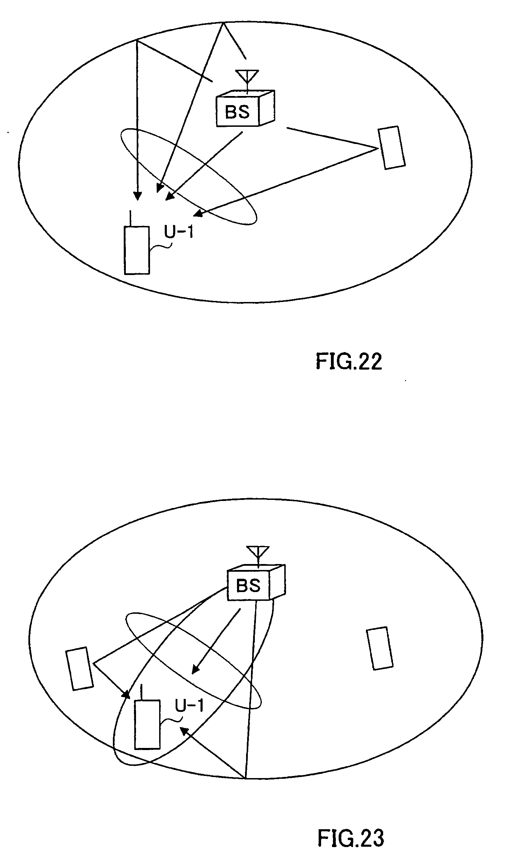

FIG.22 and FIG.23 shows differences between nondirectional transmission and directional transmission. As shown in FIG.22, transmission diversity of a control channel is intended to send common control information to communication terminals in the cell, and therefore nondirectional transmission is always carried out so that all communication terminals in the cell can receive the common control information. On the other hand, as shown in FIG. 23, the communication channel may carry out directional transmission so that a maximum gain can be obtained at a target communication terminal.

As is also apparent from FIG.22 and FIG.23, it is understandable that a control channel and communication channel may have different propagation paths due to the differences between the two transmission methods. An optimum path position for a communication terminal is one when a plurality of elementary waves arrives from various angles at the same time and is received strengthening or weakening each other. When the number of elementary waves or the direction of arrival differs, propagation paths may naturally differ, that is, the system is placed in a fading environment and path positions may also differ.

Thus, when a control channel detects a window width excess and sets a detection windowwidth for path selection relative to an amount of delay α which is an amount of the excess, the reliability of the detection window width setting may differ depending on the transmission method of the base station. That is, when the transmission method of a control channel is the same as that of a communication channel, the reliability of the window width setting is high, while when the transmission method of the control channel is different from that of the communication channel, the reliability of the window width setting is low. However, the path position here does not refer to an instantaneous change due to fading but refers to the path position detected from a delay profile which has been averaged to a certain degree with instantaneous fading variations suppressed.

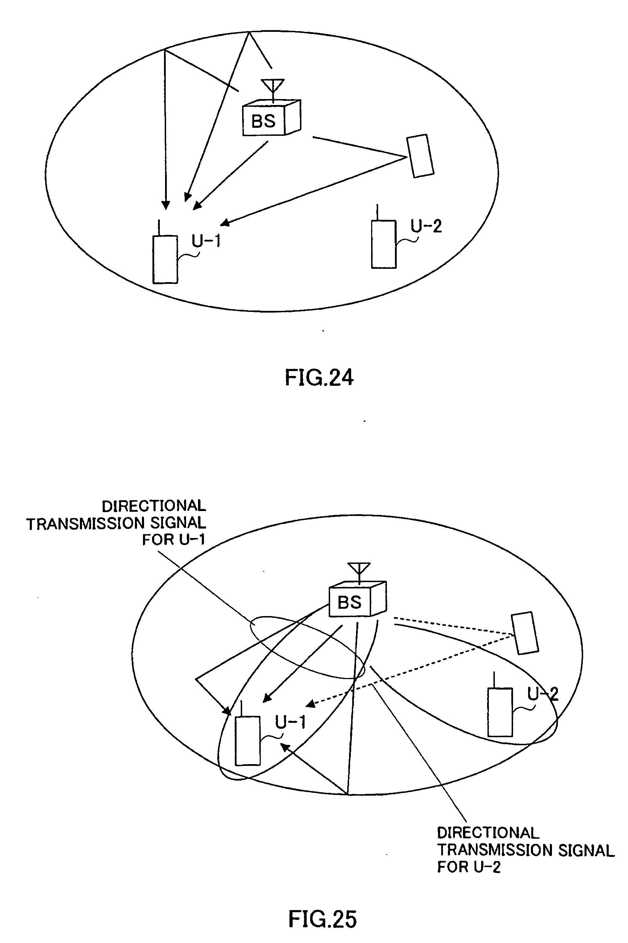

Then, a case where a communication terminal U-1 performs path detection, path positions of various communication terminals may differ depending on their transmission methods even within the same time slot will be explained using FIG. 24 and FIG.25. FIG.24 shows a case where a base station BS is carrying out nondirectional transmission. In the case of nondirectional transmission, a signal sent from the base station BS to the communication terminal U-1 and a signal sent to the communication terminal U-2 have the same transmitting point and receiving point, and therefore the path positions of the other communication terminal U-2 viewed from the communication terminal U-1 are the same as the path positions of the communication terminal U-1.

On the contrary, as shown in FIG.25, when the base station BS is carrying out directional transmission, suppose the base station BS transmits data with directivity to the communication terminal U-1 and also transmits data with directivity to the communication terminal U-2. Then, a path indicated by a dotted line is also received by the communication terminal U-1. Therefore, when the position (directivity) of the communication terminal U-2, which is the other station, moves, there is a high possibility that the communication terminal U-1 may receive different elementary waves. As a result, path positions may differ between the communication terminals. Thus, due to the difference in path positions between the communication terminals, the reliability of the masking method within the detection window width itself may deteriorate between the communication terminals.

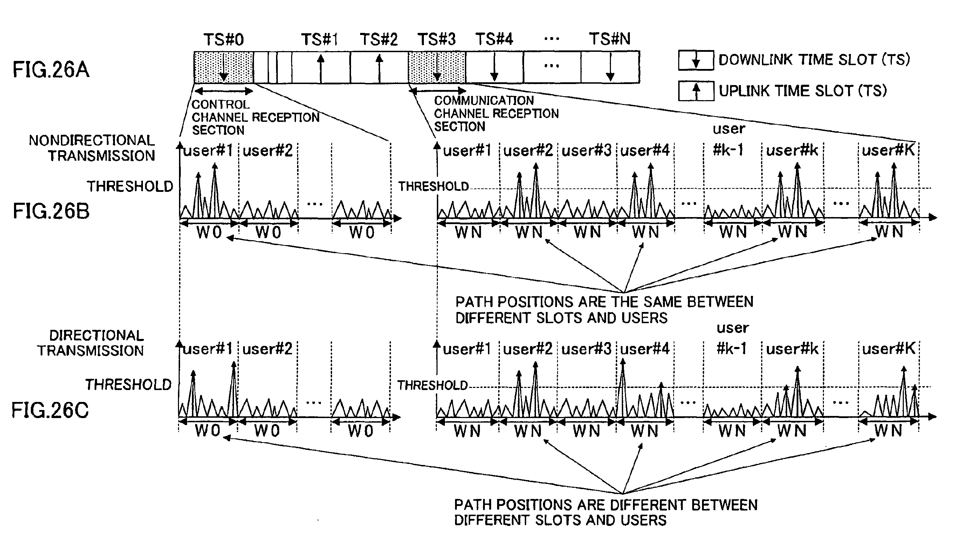

This can be summarized as shown in FIG.26A to FIG.26C. As shown in FIG. 26B, when the base station transmits communication channels without directivity, the path position obtained by receiving the control channel with a time slot TS#0 becomes the same as the path position obtained by receiving the control channel with a time slot TS#3. That is, the path positions are the same between the slots. Moreover, thepathpositionsobtained by receiving communication channels at the time slot TS#3 are also the same between the communication terminals.

On the contrary, as shown in FIG.26C, when the base station transmits communication channels with directivity, the path position obtained by receiving the control channel at the time slot TS#0 is different from the path position obtained by receiving the control channel at the time slot TS#3. That is, path positions differ between slots. Moreover, the path positions obtained by receiving communication channels at the time slot TS#3 also differ between the communication terminals.

Thus, when the base station carries out directional transmission to the communication terminals in the cell, path positions appearing within the respective detection windows may vary between the time slots and may also vary between the communication terminals.

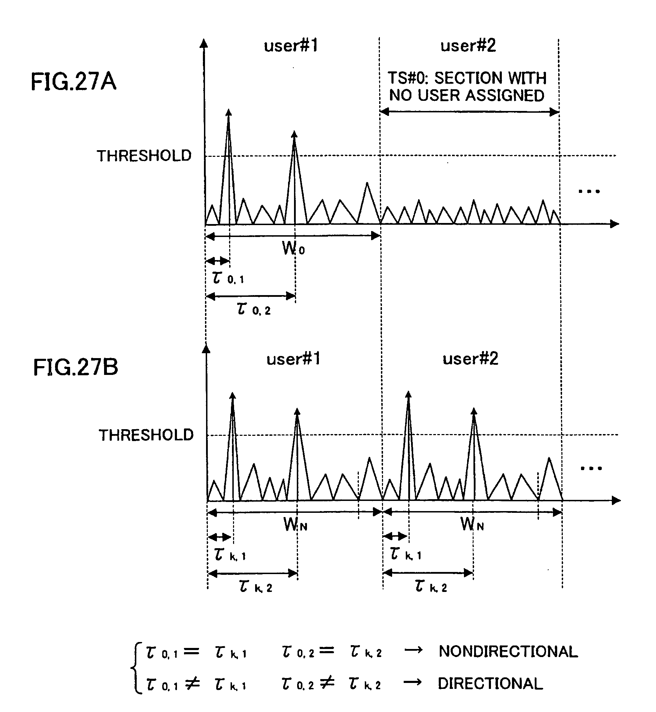

Considering this, the communication terminal apparatus 500 of this embodiment is provided with the nondirectional transmission decision section 501 to distinguish whether the transmission method of the base station is nondirectional or directional. The decision processing by the nondirectional transmission decision section 501 will be explained using FIG.27A and FIG. 27B.

FIG.27A shows a delay profile of a control channel received at the time slot TS#0 and is a case with two paths. FIG. 27B shows a delay profile of a control channel received at the time slot TS#3.

The nondirectional transmission decision section 501 detects whether all the path positions are the same or not and thereby decides whether signals are sent with directivity or without directivity. More specifically, suppose path timings of the first path and second path of the time slot TS#0 shown in FIG.27A from the start of the detection window are τ_{0,1} and τ_{0,2} and path timings of the first path and second path of the communication terminal k in the delay profile of the time slot TS#N which is the communication channel shown in FIG. 27B are τ_{k,1} and τ_{k,2}.

At this time, when τ_{0,1} ≒ τ_{k,1} and τ_{0,2} ≒ τ_{k,2}, the nondirectional transmission decision section 501 decides that the transmission is nondirectional and when τ_{0,1} ≠ τ_{k,1} or τ_{0,2} ≠ τ_{k,2}, it decides that the transmission is directional. That is, the nondirectional transmission decision section 501 decides that the transmission method of the base station is nondirectional transmission when the first and second path positions substantially match between different time slots and decides that the transmission method is directional transmission when the first and second path positions do not match.

The nondirectional transmission decision section 501 sends the decision result to the misoperation prevention path selection section 502. When the misoperation prevention path selection section 502 receives the decision result showing that the transmission is nondirectional, it performs the same processing as that of above described Embodiment 3. On the contrary, when the misoperation prevention path selection section 502 receives the decision result showing that the transmission is directional, it amplifies the section α + Δt to be masked.

That is, in the case of directional transmission, if the area α + Δt set based on the path of the time slot TS#0 is applied to the different time slot TS#3, the reliability of the section α + Δt into which the path of the adjacent communication terminal k-1 leaks is reduced. Considering this, in the case of directional transmission, this embodiment performs processing of providing Δt with a margin of *β* and masking the expanded section α+Δt' to 0 unconditionally. Suppose Δt' has a value expressed by Δt' = Δt+*β*. The other processing of the communication terminal apparatus 500 is the same as the processing of the communication terminal apparatus 300 described in Embodiment 3.

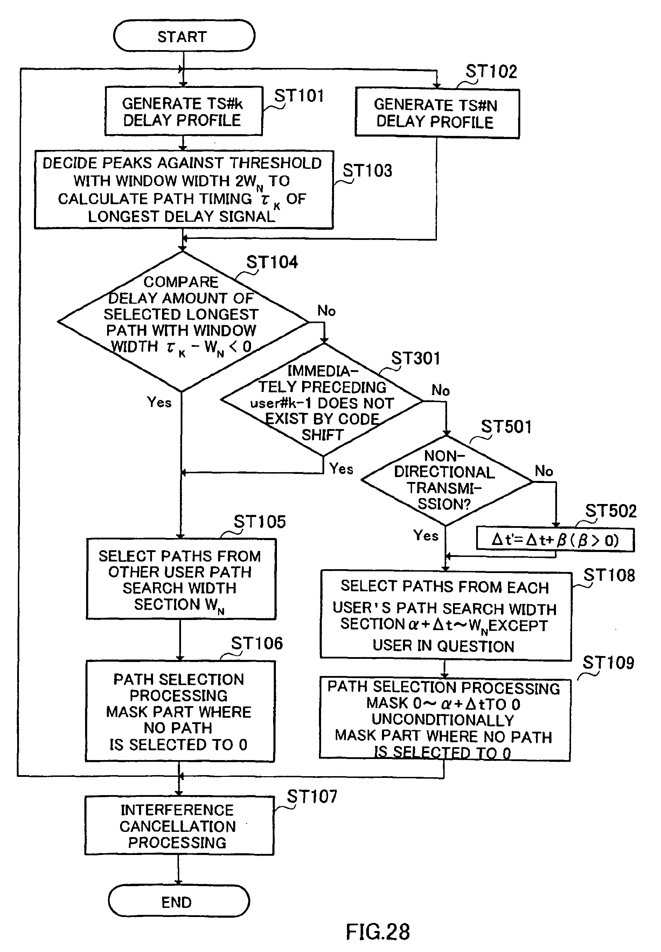

Then, operations of the communication terminal apparatus 500 of this embodiment will be explained using FIG.28. In FIG.28 in which parts corresponding to those in FIG.18 are shown with the same reference numerals assigned, when the user presence/absence detection section 301 decides in step ST301 that the immediately preceding communication terminal user #k-1 does not exist by a code shift, the communication terminal apparatus 500 moves on to step ST105 to select paths using the entire area of the detection window width W_{N}. On the other hand, when the user presence/absence detection section 301 decides in step ST301 that the immediately preceding communication terminal user #k-1 exists by a code shift, the communication terminal apparatus 500 moves on to step ST501.

In step ST501, the nondirectional transmission decision section 501 detects whether paths substantially match between different time slots or not as described above, and thereby decides whether the transmission method of the base station is nondirectional transmission or directional transmission.

Then, when the nondirectional transmission decision section 501 decides in step ST501 that the transmission is nondirectional, it moves on to step ST108, the misoperation prevention path selection section 502 selects paths in the area α + Δt' to W_{N} in which there is no influence of delay spreading within the detection windows 0 to W_{N}, then in next step ST109, it masks the area 0 to α + Δt' where there is an influence of delay spreading to 0 unconditionally and also masks the part where no path is selected to 0 in step ST108. When it changes from step ST501 to step ST108, Δt' = Δt is set.

On the other hand, when the communication terminal apparatus 500 decides in step ST501 that the transmission is directional, it moves on to step ST502, expands the margin Δt' to Δt' = Δt + β ( β >0) and moves on to step ST503. In next step ST108 and step ST109, no path selection processing is applied to the expanded area 0 to α+Δt'.

In this way, when the communication terminal apparatus 500 decides that the base station is carrying out directional transmission, it tries to expand the area where no path selection is performed. As a result, it is possible to reduce the possibility of erroneous path detection when the base station carries out directional transmission.

According to the above described configuration, the window width excess detection section 110 detects whether the delay spreading of a received signal exceeds the detection window or not, detects the amount of delay α if the delay spreading of a received signal exceeds the detection window, provides an area α + Δt where no path is selected according to the amount of delay α of delay spreading which has exceeded the detection window and expands the area α + Δt where the path detection is not performed when directional transmission is being carried out, and therefore it is possible to further reduce the possibility of erroneous path detection in addition to the effects of Embodiment 1 and Embodiment 3. As a result, it is possible to stably obtain a received signal of high quality without depending on the transmission method of the base station.

This embodiment has described the case where the nondirectional transmission decision section 501 is provided to decide whether nondirectional transmission or directional transmission is being carried out based on the path positions of delay profiles appearing between different time slots, but the present invention is not limited to this. For example, when the base station is transmitting a signal indicating whether nondirectional transmission or directional transmission is being carried out as cell-specific information, it is also possible to cause the communication terminal apparatus to receive this signal and make such a decision.

Furthermore, this embodiment has described the configuration in which when directional transmission is being carried out, the area where no path detection is performed is expanded, which is the feature of this embodiment in combination with the configuration in which path detection processing is carried out in the entire area within the detection window without providing any area where no path detection is carried out when no communication terminal is assigned to the immediately preceding detection window, which is the feature of Embodiment 3, but the present invention is not limited to this. For example, the present invention can also be implemented by combining this embodiment with the configurations of Embodiment 1, Embodiment 2 or Embodiment 4.

### (Embodiment 6)

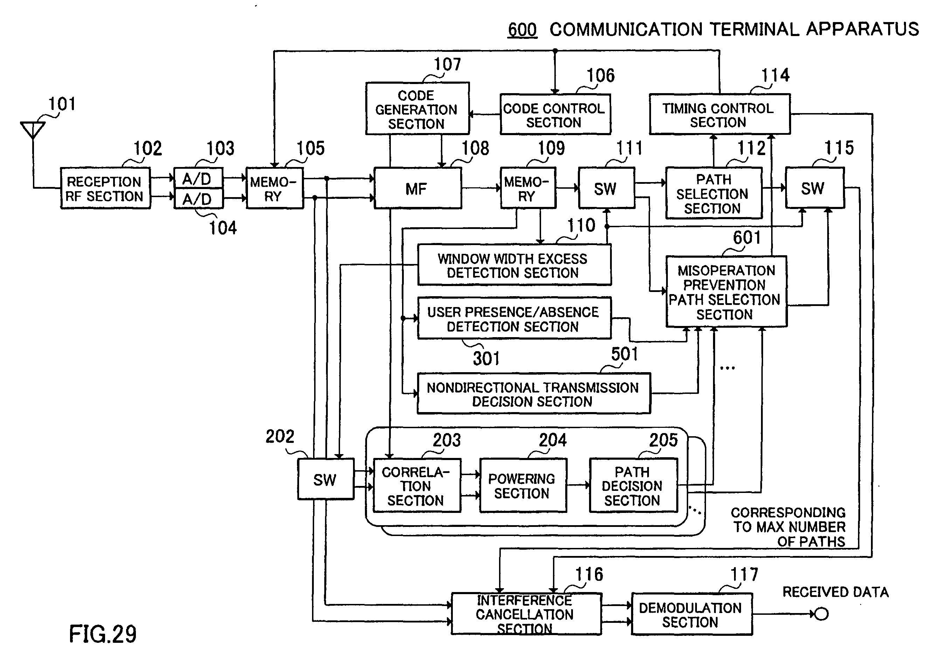

The communication terminal of this embodiment includes all configurations of characteristic parts of above described Embodiments 1 to 5. That is, as shown in FIG.29, the communication terminal apparatus of this embodiment is provided with all the configurations explained in Embodiments 1 to 5. The functions of the respective components are substantially the same as those explained in Embodiments 1 to 5, and therefore detailed explanations thereof will be omitted here.

However, a communication terminal apparatus 600 of this embodiment is provided with many correlation sections 203, powering sections 204 and path decision sections 205 in order to despread data sections using channelization codes to decide whether paths appearing in the area α + Δt' in which there is an influence of delay spreading belong to the communication terminal of the corresponding detection window or not. In the case of this embodiment, these are as many such sections as the maximum estimable number of paths.

This makes it possible to detect more paths at higher speed. In the communication terminal apparatus 600 in particular, when the nondirectional transmission decision section 501 decides that directional transmission is being carried out, the misoperation prevention path selection section 601 sets the area α + Δt' where there is an influence of delay spreading a little too wide, and therefore the number of paths detected in this area α + Δt' is likely to increase. Whenmanypaths are detected in the area α + Δt' , the amount of processing at the correlation sections 203, powering sections 204 and path decision sections 205 increases.

Considering this, this embodiment provides as many correlation sections 203, powering sections 204 and path decision sections 205 as the maximum estimable number of paths, and can thereby perform path selection processing in the expanded area α + Δt ' satisfactorily.

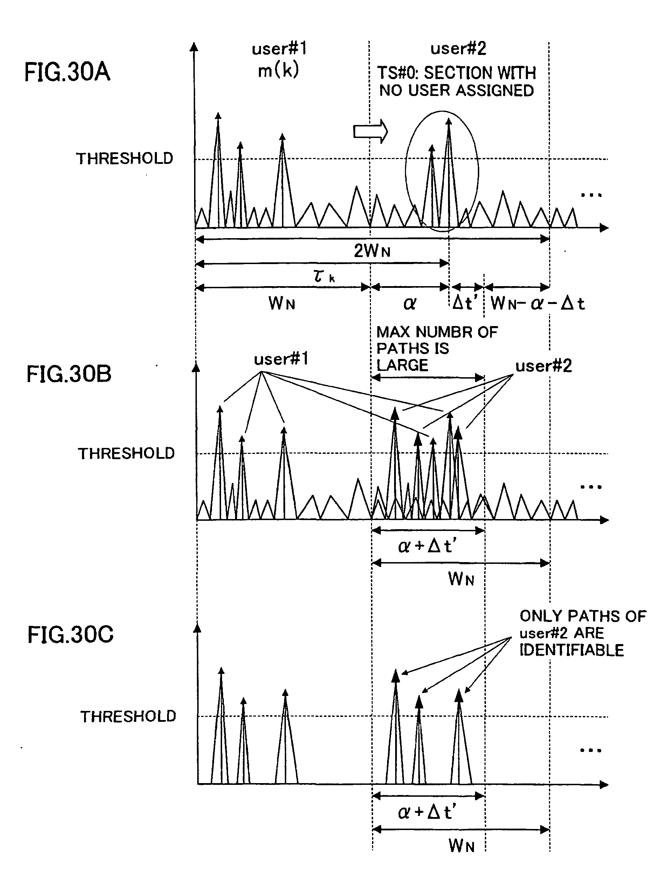

FIG. 30A to FIG.30C show path selections in the area α + Δt' which is the expanded area α where there is an influence of delay spreading. As shown in FIG.30A, a window width excess detection section 110 detects paths beyond a detection window width W_{N}. Then, when the nondirectional transmission decision section 501 decides that directional transmission is being carried out, the misoperation prevention path selection section 601 detects paths within the area α + Δt' which is the expanded area α in which there is an influence of delay spreading as shown in FIG. 30B.

Then, as shown in FIG.30C, at timings of a plurality of paths detected by the misoperation prevention path selection section 601, the correlation sections 203, powering sections 204 and path decision sections 205 perform despreading processing on the data sections using scrambling codes and channelization codes and thereby select only paths of the communication terminals actually corresponding to the detection window from among a plurality of paths.

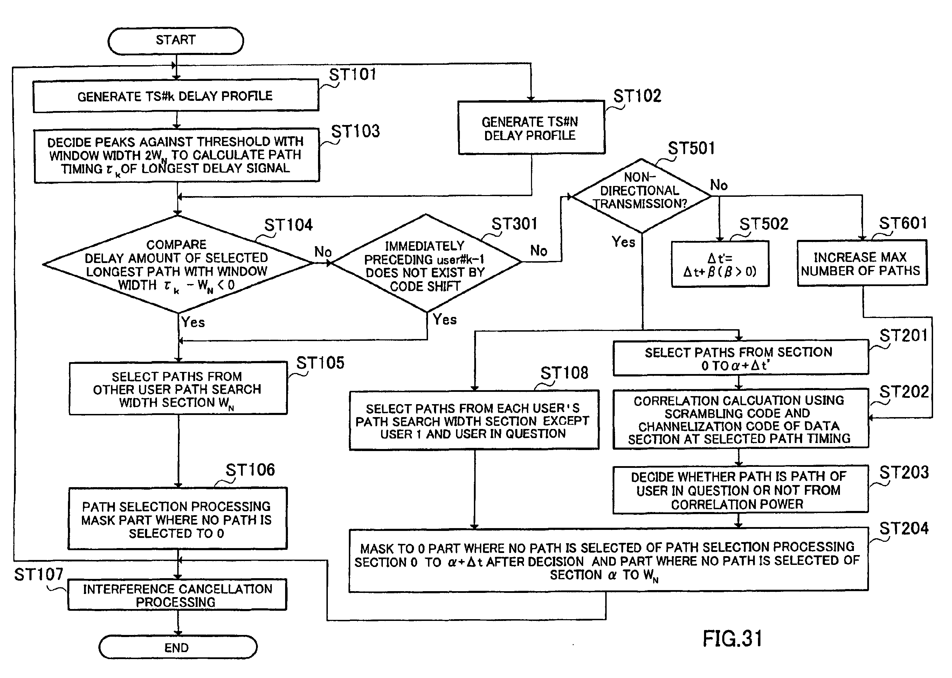

Then, operations of the communication terminal apparatus 600 of this embodiment will be explained using FIG.31. In FIG.31 in which the parts corresponding to those in FIG.10, FIG. 14, FIG.18, FIG.20 and FIG.28 are shown with the same reference numerals assigned, when the communication terminal apparatus 600 decides in step ST501 that directional transmission is being carried out, it moves on to step ST601, increases the maximum (MAX) number of paths, thereby increases the number of correlation sections 203, powering sections 204 and path decision sections 205 to be operated and moves on to step ST202. As a result, in step ST202, even if there are many paths within the area α+ Δt' in which there is an influence of delay spreading which is set a little too wide considering directional transmission, it is possible to detect those paths at a high speed and to a maximum extent.

According to the above described configuration, in addition to the effects of Embodiment 5, when an area α+ Δ' is provided considering the spreading of paths which leak in during directional transmission, it is possible to obtain the effect of being able to detect these paths at a high speed and to a maximum extent even if there are many paths in this area α + Δt' . As a result, it is possible to increase the effect of interference cancellation by an interference cancellation section 116 and avoid the reduction of the path diversity effect. Furthermore, with the user presence/absence detection section 301, a plurality of correlation sections 203, powering sections 204 and path decision sections 205 are operated only when the communication terminal k-1 assigned to the adjacent detection window exists, and therefore it has the effect of reducing current consumption and increasing the duration of a call consequently.

### (Embodiment 7)

This embodiment proposes a reception apparatus and method thereof that creates a start path distortion component which appears before the start sample of the delay profile of each midamble shift caused by the characteristic of a reception filter for every midamble shift and selects paths for every midamble shift using a delay profile after removing the start path distortion component of the delay profile of the following midamble shift in the delay profiles of midamble shifts adjacent to each other from the adjacent rear part of the delay profile of the preceding midamble shift.

Before explaining the configuration of this embodiment, the midamble to be used for the explanation of this embodiment will be explained. The content explained here is the same as the above described content using FIG.2 and FIG. 3. However, this embodiment explains midamble codes bearing new names, and therefore similar explanations will also be given to define those names.

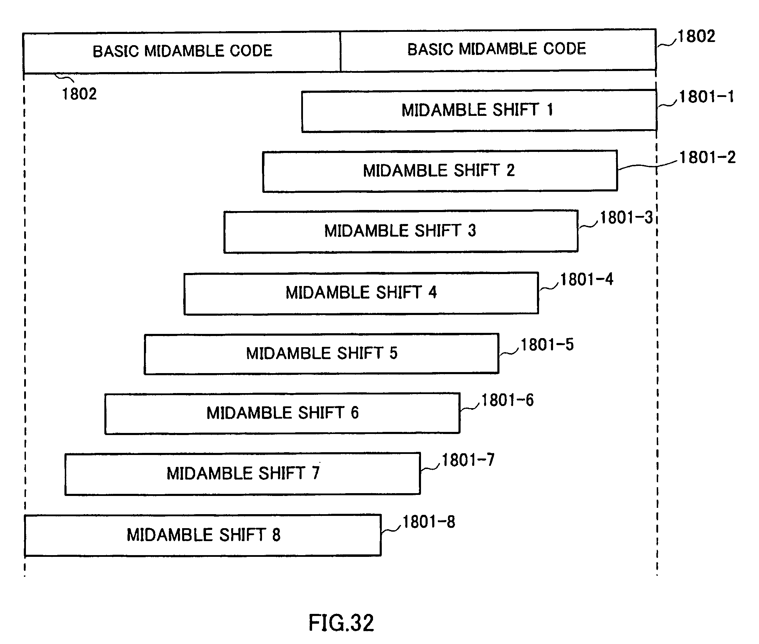

FIG.32 is an example of a method of creating midambles (when K is 1 to 8, K denotes a type of midamble shift). Midamble shifts 1801-1 to 1801-8 have 144 chips in length and these eight midamble shifts (8 types) are created by combining two basic midambles 1802 each of which is a 128-chip known string and cyclically shifting every 16 chips within this range. Then, each user signal is assigned any one of the eight types of midamble and sent.

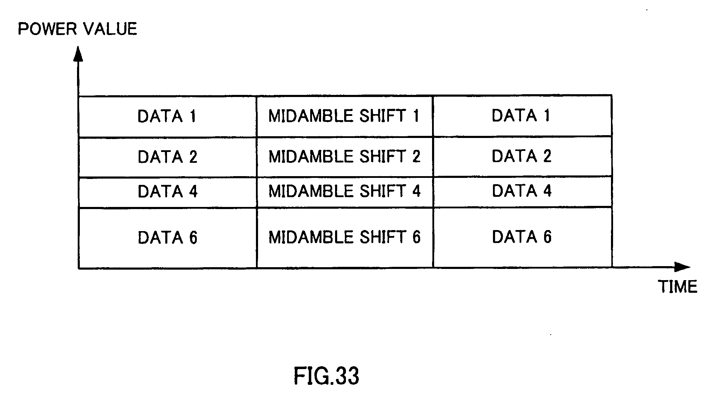

There are three schemes for assigning midambles to users; a default midamble assignment scheme in which a relationship between channelisation codes to be used and midamble codes is predetermined, a UE specific midamble assignment scheme in which an individual midamble code is used for each user and a common midamble assignment scheme in which a midamble code common to all users is used. An example of slots based on the default midamble assignment scheme is shown in FIG.33.

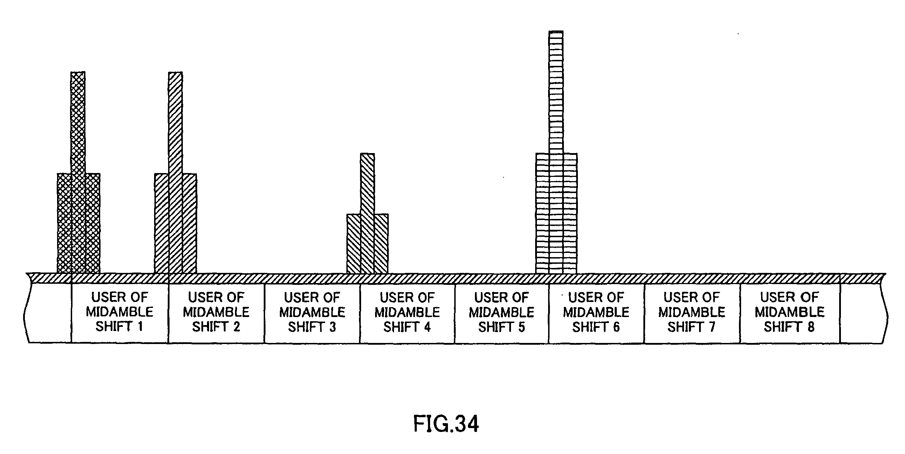

When a correlation between midambles included in a received signal is found, the receiving side carries out correlation calculations by cyclically shifting the basic midamble code every 16 chips and creates delay profiles sequentially continued from midamble shift 1 to midamble shift 8 as shown in FIG.34. Then, paths are selected from the delay profiles created, the selected paths are RAKE-combined and JD processing is carried out using the RAKE-combining result and delay profiles.

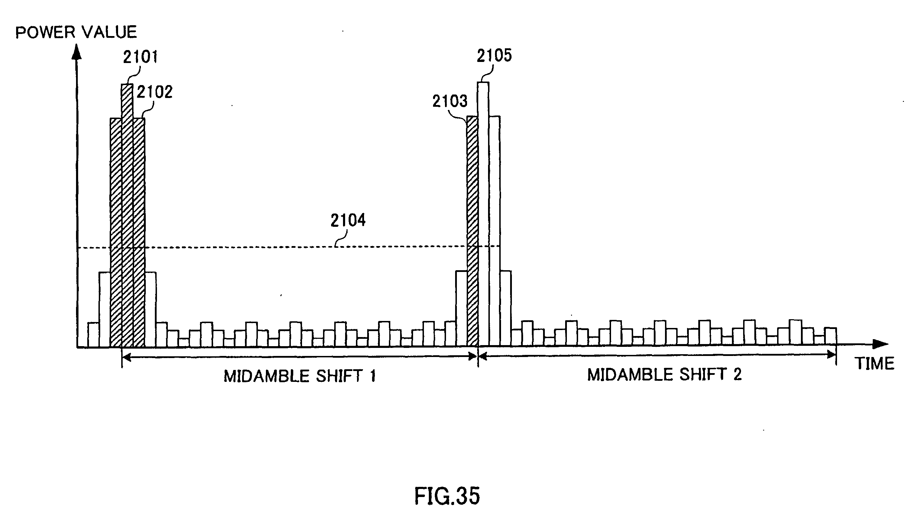

Though a delay profile is created for every midamble shift consecutively, part of distorted power of the start sample of the following midamble shift may appear behind the delay profile of the preceding midamble shift due to the characteristic of a reception filter. That is, as shown in FIG.35, when attention is focused on the midamble shift 1 and midamble shift 2, samples 2101, 2102 and 2103 whose power values exceed a threshold 2104 are selected as paths. However, since the path 2103 is a rear sample of the midamble shift 1, it may include distorted power of a start sample 2105 in the delay profile of the midamble shift 2.

With attention focused on this point, even if a distorted power value of a start path in the delay profile of another midamble shift appears behind the delay profile of the own midamble shift, this embodiment avoids selecting a path distortion component in the delay profile of the other midamble shift as the own path.

That is, the object of this embodiment is to effectively remove the path components of other stations appearing in a detection window as in the cases of above described Embodiments 1 to 6 and prevent erroneous detection of paths. However, this embodiment proposes an apparatus and method for effectively removing the path components of other stations appearing in the detection window due to a reception filter characteristic instead of removing leakage of paths due to multi-paths, etc.

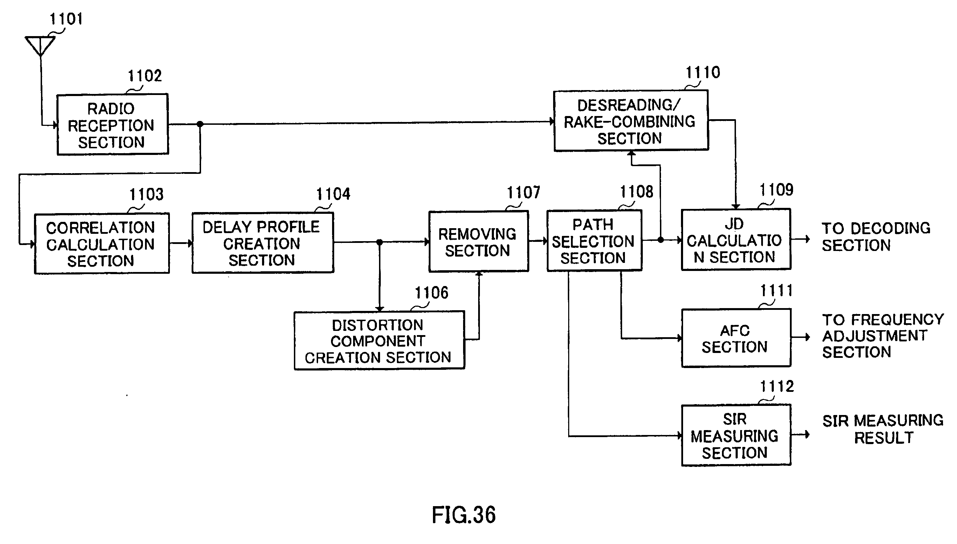

FIG.36 shows a configuration of a reception apparatus according to Embodiment 7 of the present invention. The reception apparatus of this embodiment is principally constructed of an antenna 1101, a radio reception section 1102, a correlation calculation section 1103, a delay profile creation section 1104, a distortion component creation section 1106, a removing section 1107, a path selection section 1108, a JD calculation section 1109, a despreading/RAKE-combining section 1110, an AFC (Automatic Frequency Control) section 1111 and SIR measuring section 1112.

The radio reception section 1102 which is a band restriction section applies predetermined reception processing such as down-conversion to a signal received by the antenna 1101, converts it to a baseband signal and outputs it to the correlation calculation section 1103 and despreading/RAKE-combining section 1110. Furthermore, the radio reception section 1102 imposes band restrictions on the received signal so as not to pick up noise for the received signal using a reception filter (not shown) (e.g., a roll-off filter) whenever possible.

The correlation calculation section 1103 carries out a correlation calculation between a pilot signal section called "midamble" included in the received signal which is input from the radio reception section 1102 and a midamble string obtained by cyclically shifting a known basic midamble by a predetermined amount at a time and outputs the calculation result to the delay profile creation section 1104.

The delay profile creation section 1104 creates a continuous delay profile as shown in FIG.34 for every midamble shift based on the calculation result input from the correlation calculation section 1103 and outputs it to the distortion component creation section 1106 and removing section 1107. When 8 types of midamble shifts are used, each user uses any one of midamble shifts 1 to 8. Each user uses any one or a plurality of midamble shifts. Furthermore, the number of types of midamble shifts may also be other than 8.

Delay profiles are created one by one from midamble shift 1 to midamble shift 8 and after the delay profile of themidamble shift 8, adelayprofile of anothermidamble shift 1 is created and subsequent delay profiles are also created repeatedly in the like manner.

The distortion component creation section 1106 uses the delay profile input from the delay profile creation section 1104 and multiplies the power value of the start sample of each midamble shift out of this delay profile by a coefficient of the reception filter. In this way, a start path distortion component corresponding to a predetermined number of samples whose power value tends to decrease in the forward direction from one sample to another with the start sample representing a peak power value is created.

The start path distortion component created has substantially the same power value generated due to the reception filter characteristic at the radio reception section 1102. The distortion component creation section 1106 outputs the start path distortion component created to the removing section 1107. The processing by the distortion component creation section 1106 is carried out on all midamble shifts irrespective of whether each midamble shift is in communication or not. Furthermore, each midamble shift considers the start sample as the peak of the start path and always uses the start sample when the start path distortion component is created. The method of creating the start path distortion component will be described later.

The removing section 1107 removes the power value of the start path distortion component created by the distortion component creation section 1106 from the delay profile created by the delay profile creation section 1104 sample by sample. Then, the removing section 1107 outputs the delay profile after removing the start path distortion component to the path selection section 1108. The method of removing the start path distortion component will be described later.

The path selection section 1108 uses the delay profile of each midamble shift input from the removing section 1107, selects peaks exceeding a preset threshold as paths and outputs the selected paths to the AFC section 1111, SIR measuring section 1112, JD calculation section 1109 and despreading/RAKE-combining section 1110. For the setting of the threshold by the path selection section 1108, it is possible to apply a method of setting a threshold for every midamble shift by multiplying the peak power value by a predetermined constant for every midamble shift, a method of setting a value calculated by multiplying a noise level by a constant as a threshold and a method of using a threshold calculated for one midamble shift as a threshold common to all midamble shifts, etc.

The JD calculation section 1109 which is a demodulation section performs JD calculation processing on the received signal over one time slot based on the RAKE-combined received signal input from the despreading/RAKE-combining section 1110 and selected path information input from the path selection section 1108, outputs it to a decoding section (not shown in the figure) and obtains received data. Here, a JD calculation is a calculation method described in, for example, Japanese Patent Application No. 2001-156625.

The despreading/RAKE-combining section 1110 which is a demodulation section uses the selected path information input from the path selection section 1108 and received signal input from the radio reception section 1102, despreads and RAKE-combines them and outputs the RAKE-combining result to the JD calculation section 1109.

The AFC section 1111 uses the paths selected by the path selection section 1108, detects a phase difference of the received signal and outputs a signal for adjusting the frequency on the receiving side from the detected phase difference to a frequency adjusting section (not shown).

The SIR measuring section 1112 uses the paths selected by the path selection section 1108, measures a ratio of signal power to interference power and outputs the measuring result. An SIR can also be measured without using the selected paths.

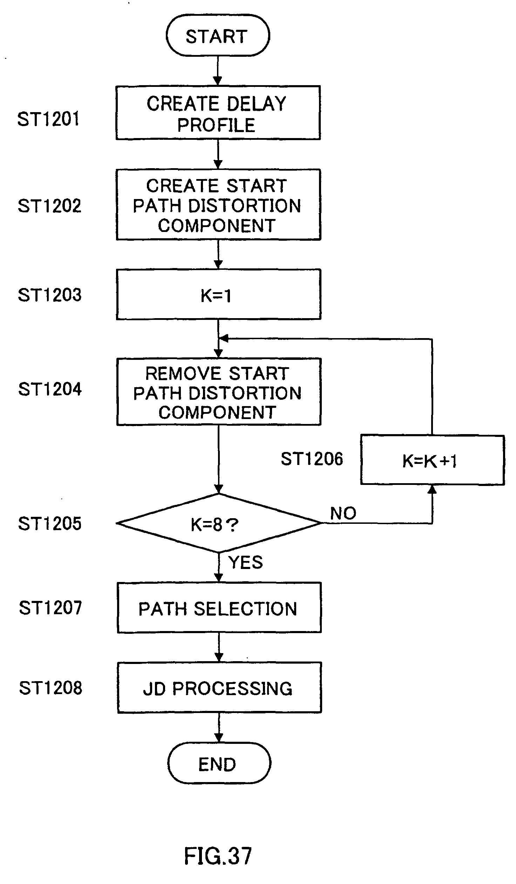

Then, an example of operations of the reception apparatus (case where K is 1 to 8) will be explained using the flow chart in FIG. 37 . A signal receivedby the antenna 1101 is subjected to predetermined reception processing such as processing by a reception filter and down-conversion at the radio reception section 1102, converted to a baseband signal, subjected to a correlation calculation at the correlation calculation section 1103 and delay profiles are created by the delay profile creation section 1104 from the received signal subjected to the correlation calculation (step (hereinafter described as "ST") 1201). Then, the distortion component creation section 1106 creates a start path distortion component using the start sample regarded as a peak of the start path of each midamble shift (ST1202) and sets 1 in the midamble shift K (ST1203).

Then, the removing section 1107 removes the power value of the start path distortion component of the following midamble shift from the delay profile for every midamble shift (ST1204).

Then, the removing section 1107 decides whether K is 8 or not (ST1205). If K is not 8, 1 is added to the value of K (ST1206). On the other hand, if K=8 in ST1205, the path selection section 1108 selects samples whose power value is equal to or greater than a threshold as paths using a delay profile after removing the start path distortion component (ST1207). Then, using the selected paths, the JD calculation section 1109 performs JD processing on eachmidamble shift using the selectedpaths (ST1208), decodes this to obtain received data. It is only by way of example that the value of K is set to 8 and it can be changed arbitrarily according to the number of midamble shifts.

Then, the method of creating the start path distortion component at the distortion component creation section 1106 and the method of removing the start path distortion component at the removing section 1107 will be explained. For convenience of explanation, only the midamble shift 1 and midamble shift 2 will be explained, but the same applies to the midamble shift 3 to midamble shift 8, too.

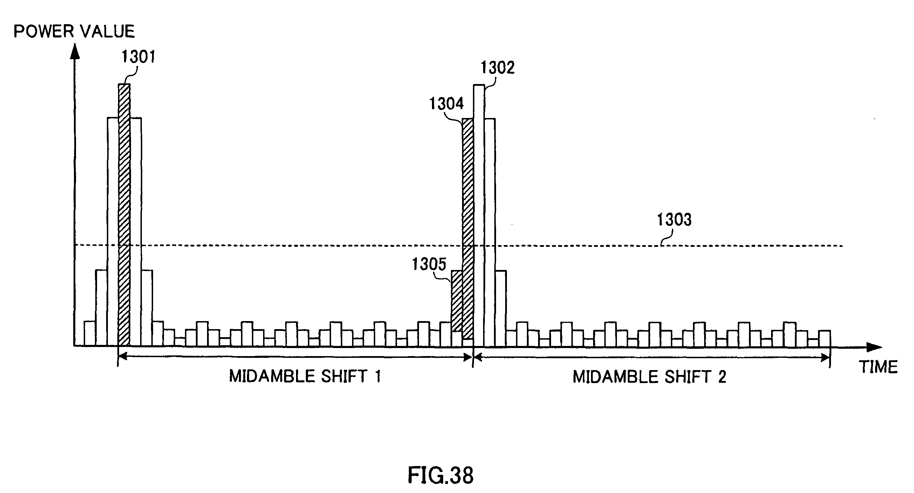

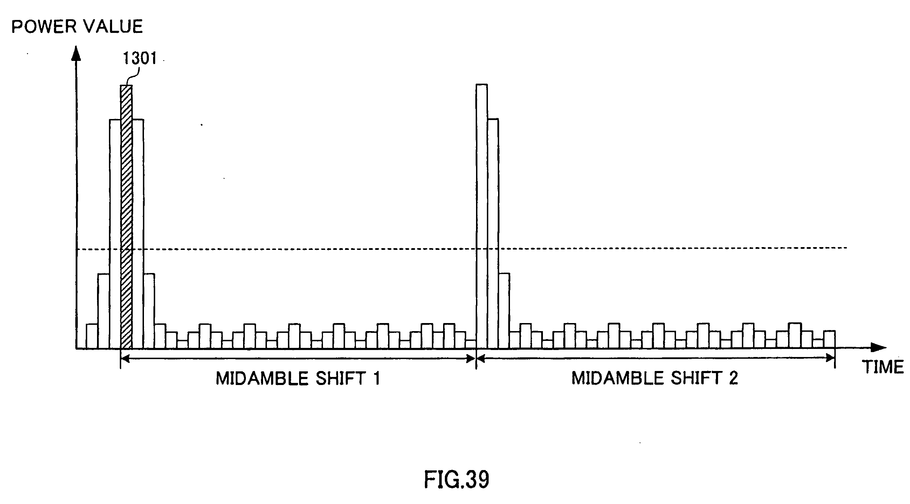

First, a case where the power value except a noise component corresponding to a predetermined number of samples in the rearward position of the midamble shift 1 is distorted power of the start path in a delay profile of the midamble shift 2 will be explained using FIG.38 and FIG.39. In FIG.38 and FIG.39, the horizontal axis shows a time and the vertical axis shows a power value. A delay profile of each midamble shift is formed of 32 samples and each sample has some power value. One chip is not limited to a case of 1 sample, but can be set to an arbitrary number of samples. In FIG.38, sample 1301 is a start sample regarded as the start path of the midamble shift 1 which is the preceding midamble shift and sample 1302 is a start sample regarded as the start path of the midamble shift 2 which is the following midamble shift. The start path is selected for every midamble shift at intervals of 32 samples.

The path selection section 1108 selects samples having a power value equal to or greater than a threshold 1303 as paths, and therefore in the state shown in FIG.38 when the path selection section 1108 selects paths and deletes paths which can be regarded as the same paths, the sample 1301 and sample 1304 are selected as paths of the midamble shift 1. However, the power value except the noise component of the sample 1304 is a distorted power value in the delay profile of the midamble shift 2 and if the sample 1304 remains selected as the path of the midamble shift 1, the characteristic will deteriorate.

Thus, the distortion component creation section 1106 multiplies the power value of the sample 1302 of the midamble shift 2 by a coefficient of the reception filter to create start path distortion components corresponding to 2 samples. The start path distortion components created have levels differing from one sample to another whose power value tends to decrease in the forward direction.

In the case of FIG.38, the start path distortion components of the midamble shift 2 created using the power value of the sample 1302 are substantially the same as the parts of the samples 1305 and 1304 except the noise component (shaded areas of the samples 1305 and 1304) and the power value of the start path distortion component is substantially the same power value of the samples 1305 and 1304 except the noise component. Then, when the removing section 1107 removes the power value of the start path distortion component created by the distortion component creation section 1106 from the power value of the samples 1305 and 1304 except the noise component for every sample, then the power value becomes close to a value of only noise as shown in FIG.39.

The path selection section 1108 selects paths using the delay profile of the midamble shift 1 after removing the start path distortion components of the midamble shift 2, and therefore it selects only the sample 1301 as the path of the midamble shift 1.

The number of samples for which start path distortion components are created is not limited to 2, but it is possible to create an arbitrary number of samples for which the power value of the delay profile of the midamble shift 2 may exist in the rearward position of the delay profile of the midamble shift 1. Furthermore, after the power value of the start path distortion component is removed from the power value corresponding to the predetermined number of rear samples of the midamble shift 1, when the power value of the midamble shift 1 remains in the predetermined rear samples, if the power value of the predetermined number of rear samples is smaller than a threshold, the predetermined number of rear samples are not selected as paths.

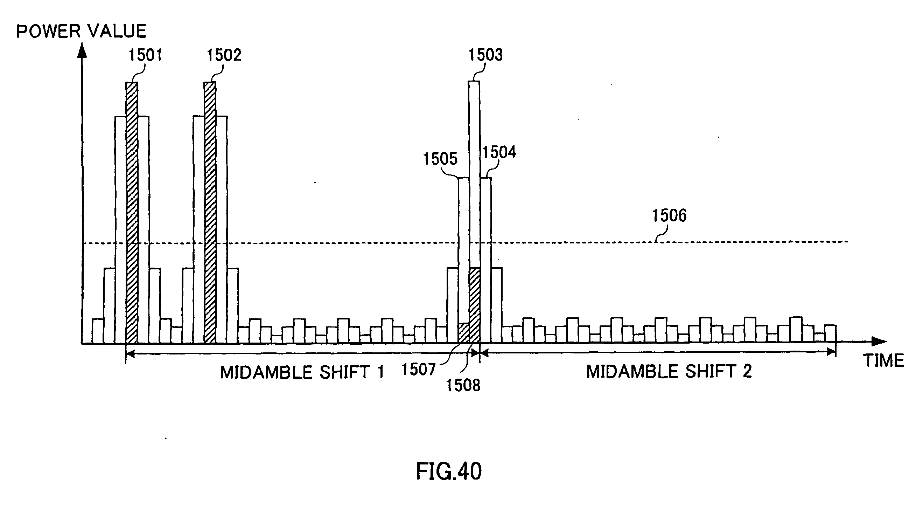

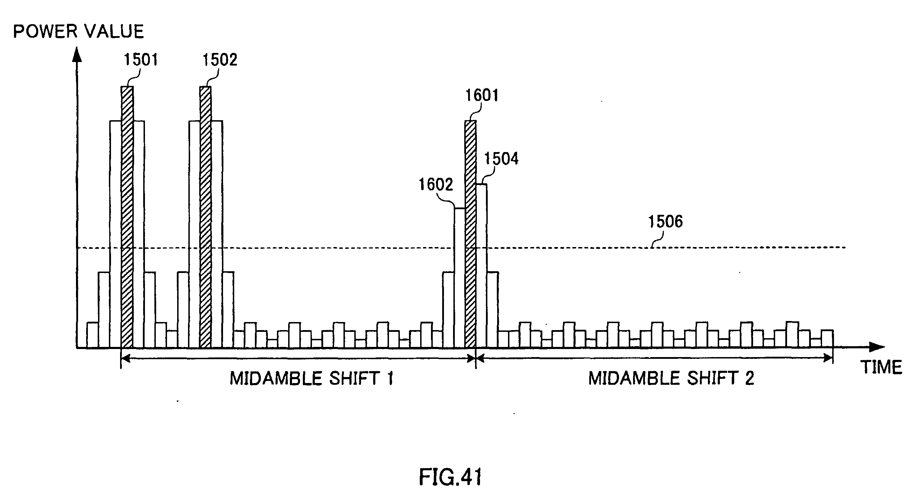

Next, a case where the power value of the midamble shift 2 except noise components corresponding to a predetermined number of start samples is distorted power of paths in the rearward position in the delay profile of the midamble shift 1 will be explained using FIG.40 and FIG. 41. In FIG.40 and FIG.41, the horizontal axis shows a time and the vertical axis shows a power value. In FIG.40, sample 1501 is a start sample regarded as the start path of the midamble shift 1 which is the preceding user and sample 1504 is a start sample regarded as the start path of the midamble shift 2 which is the following user.

The path selection section 1108 selects samples having a power value equal to or greater than a threshold 1506 as paths, and therefore if the path selection section 1108 selects paths and deletes paths which are regarded as the same paths in the state in FIG.40, the samples 1501, 1502 and 1503 are selected as the paths of the midamble shift 1. However, the power value of the sample 1503 may be distorted power of the delay profile of the midamble shift 2. Thus, when the power value of the sample 1503 is the distorted power of the midamble shift 2, selecting the sample 1503 as the path of the midamble shift 1 causes the characteristic to deteriorate.

Therefore, it is necessary to decide whether the sample 1503 is a path of the midamble shift 1 is or not. Thus, the distortion component creation section 1106 creates start path distortion components corresponding to two samples bymultiplying the power value of the sample 1504 by a coefficient of the reception filter. That is, the distortion component creation section 1106 creates substantially the same filter as the reception filter used in the radio reception section 1102 to create start path distortion components corresponding to two samples ahead of the sample 1504. The start path distortion components created have levels differing from one sample to another whose power value tends to decrease in the forward direction.

In the case of FIG.40, the start path distortion components 1507 and 1508 (shaded areas) of the midamble shift 2 created using the power value of the sample 1504 are parts of the samples 1503 and 1505 and the power values of the start path distortion components are smaller than the power values of the samples 1503 and 1505. Then, when the removing section 1107 removes the power values of the start path distortion components 1507 and 1508 created by the distortion component creation section 1106 from the power values of the samples 1505 and 1503, then samples 1602 and 1601 have a little smaller power values than the power values before the removing section 1107 removes the start path distortion components 1507 and 1508 as shown in FIG.41. That is, the power values of the samples 1601 and 1602 can be regarded as power values obtained by subtracting the power values of the start path distortion components 1507 and 1508 created by the distortion component creation section 1106 from the power values of the samples 1503 and 1505.

Since the power value of the sample 1601 is greater than a threshold 1506 even after the start path distortion components 1507 and 1508 are removed, the sample 1601 is selected as the path of the midamble shift 1. Therefore, the path selection section 1108 selects paths using the delay profile of the midamble shift 1 after removing the start path distortion components 1507 and 1508, and therefore the samples 1501, 1502 and 1601 are selected as the paths of the midamble shift 1. Thus, by selecting the sample 1601 which is the path of the midamble shift 1 as the path, it is possible to prevent deterioration of the demodulation performance of the midamble shift 1.

Thus, the reception apparatus and reception method of this embodiment selects paths after removing the power values of start path distortion components from a delay profile sample by sample, and can thereby demodulate the received signal without causing deterioration of the characteristic when distorted power of another midamble shift appears behind the delay profile.

Furthermore, the AFC section 1111 adjusts the frequency on the receiving side using the selected paths, and can thereby adjust the frequency on the receiving side without causing deterioration of the characteristic. Moreover, an SIR is measured using the selected paths, and therefore it is possible to measure the SIR without causing deterioration of the characteristic. Furthermore, when deciding whether a selected path behind the delay profile is the own path or not, it is not necessary for eachmidamble shift to decide whether another midamble shift is in communication or not, which makes the processing of path selection easier and prevents a slowdown of the speed of processing the received signal. Furthermore, the start sample of each midamble shift is regarded as a path and start path distortion components are always created using the start sample, and therefore it is easy to create the start path distortion components.

This embodiment has described the case where JD demodulation is used as the demodulation method, but any demodulation method other than JD demodulation can also be used. Furthermore, it is also possible for the distortion component creation section 1106 and removing section 1107 to subtract noise components from the power value of the start sample, multiply the remaining power values by a coefficient of the reception filter to create start path distortion components and remove the start path distortion components created from the remaining power values except the noise components of the power values corresponding to a predetermined number of samples behind the forward midamble shift for every sample. Furthermore, the reception apparatus of this embodiment can also be used for a base station apparatus and communication terminal apparatus.

The present invention is not limited to above described Embodiments 1 to 7, but can also be implemented modified in various ways.

A path detection apparatus according to a first aspect of the present invention is a path detection apparatus that receives from a radio base station a signal including midamble signals obtained by simultaneously multiplexing a plurality of midamble codes specific to their respective communication terminals formed by cyclically shifting a cell-specific basic midamble code by a unit shift amount, comprising a delay profile generation section that finds a correlation between a plurality of midamble signals included in the received signal and a cell-specific basic midamble code provided beforehand and generates delay profiles of signals directed to the own station and other stations, a path selection section that delimits delay profiles of signals directed to the own station and other stations appearing in time sequence by detection windows having a window width corresponding to a unit shift amount of the basic midamble code, detects peaks of delay profiles appearing within each detection window and thereby selects paths of signals directed to the own station and other stations and a window width excess detection section that detects delay spreading of paths of the received signal and detects whether the delay spreading exceeds the detection window or not or detects an amount of delay exceeding the detection window, wherein the range of path selection or the way of path selection by the path selection section is adaptively set based on the detection result of the window width excess detection section.

According to this configuration, a window width excess detection section is provided and the range of path selection or the way of path selection by the path selection section is adaptively set based on the detection result of the window width excess detection section, and therefore when the delay spreading exceeds the detection window width, it is possible to prevent erroneous selection of peaks of a signal directed to a communication terminal other than those to be detected within the detection window which have leaked into the adjacent detection window as paths of the signal directed to the communication terminal to be detected within the detection window. As a result, it is possible to exactly detect paths of signals directed to the respective communication terminals.

A path detection apparatus according to a second aspect of the present invention is constructed in such a way that when the window width excess detection section shows a detection result that the path delay spreading falls within the detection window, the path selection section selects paths in the entire area within the detection window, while the window width excess detection section shows a detection result that the path delay spreading exceeds the detection window, the path selection section excludes the area corresponding to the amount of delay exceeding the detection window from the path selection area.

A path detection apparatus according to a third aspect of the present invention is constructed in such a way that the path selection section comprises a first path selection section that delimits the delay profile by detection window widths having a window width corresponding to a unit shift amount of a basic midamble code, detects peaks of the delay profile appearing in the entire area within each detection window and selects paths, a second path selection section that delimits the delay profile by detection window widths having a window width corresponding to a unit shift amount of a basic midamble code, excludes an area corresponding to an amount of delay exceeding the detection window within each detection window from the path selection area and a switching section that supplies the delay profile formed by a delay profile generation section to either the first path selection section or second path selection section based on the detection result of the window width excess detection section.

According to these configurations, when the delay spreading exceeds the detection window width, it is possible to prevent peaks of a signal directed to a communication terminal not to be detected within the detection window which have leaked into the adjacent detection window from being mistakenly selected as paths of the signal directed to the communication terminal to be detected within the detection window. As a result, it is possible to exactly detect paths of signals directed to the respective communication terminals.

A path detection apparatus according to a fourth aspect of the present invention comprises, in addition to the configuration of the above described first aspect, a despreading section that despreads received signals which have been spread using channelisation codes specific to the own station and other stations at path timings selected by the path selection section and using the channelisation codes specific to the own station and other stations and a decision section that decides whether the selected paths are appropriate or not based on the levels of the despread signals.

According to this configuration, even if peaks of a signal directed to a communication terminal not to be detected within the detection window which have leaked into the adjacent detection window are mistakenly selected as paths of the signal directed to the communication terminal to be detected within the detection window, the decision section decides whether the selected paths are appropriate paths or not, and therefore it is possible to prevent erroneous path selections even more.

A path detection apparatus according to a fifth aspect of the present invention is the above described fourth aspect constructed in such a way that the processing by the despreading section and the decision section is only performed on paths selected within the area where the window width excess detection section detects that delay spreading exceeds the detection window out of paths selected by the path selection section.

According to this configuration, the processing by the despreading section and the decision section is limited to only the area where there is a high possibility that paths may be actually leaked in from the adjacent detection window, and therefore it is possible to efficiently prevent erroneous path selections with a small amount of processing.

A path detection apparatus according to a sixth aspect of the present invention further comprises, in addition to the configuration of the above described second aspect, a section that detects whether detection windows adjacent to each other are assignedmidamble codes to be detected or not, wherein when the adjacent detection windows are not assigned any midamble code, paths are selected in the entire area of the detection window even when the window width excess detection section shows a detection result that path delay spreading exceeds the detection window.

According to this configuration, when the adjacent detection windows are not assigned any midamble code, paths never leak from the adjacent detection window even if the delay spreading exceeds the detection window, and in such a case paths are selected in the entire area of the detection window regardless of the path delay spreading, and therefore it is possible to exactly detect paths of signals directed to the respective communication terminals without decreasing the path diversity effect.

A path detection apparatus according to a seventh aspect of the present invention further comprises, in addition to the configuration of the above described first aspect, a transmission method decision section that decides whether the received signal is a signal transmitted without directivity or signal transmitted with directivity, wherein when the transmission method decision section shows a decision result that the transmission is with directivity, the path delay spreading of the received signal detected by the window width excess detection section is considered wider than the actually detected spreading.

According to this configuration, even when the path positions due to directional transmission vary from one time slot to another or from one communication terminal to another, the area to be recognized as the delay spreading is set to a little too wider, and therefore it is possible to prevent peaks of signals directed to communication terminals not to be detected within the detection window from being mistakenly selected as paths of the signals directed to communication terminals to be detected within the detection window.

A path detection apparatus according to an eighth aspect of the present invention further comprises, in addition to the configurations of the above described third and fourth aspects, a transmission method decision section that decides whether the received signal is a signal transmitted without directivity or signal transmitted with directivity, wherein when the transmission method decision section shows a decision result that the transmission is with directivity, the path selection section expands the area to be excluded from the path selection area.

According to this configuration, even when the path positions due to directional transmission vary from one time slot to another or from one communication terminal to another, the area to be excluded from the path selection area by the path selection section during directional transmission is expanded, and therefore it is possible to prevent peaks of signals directed to communication terminals not to be detected within the detection window from being mistakenly selected as paths of the signals directed to communication terminals to be detected within the detection window.

A path detection apparatus according to a ninth aspect of the present invention is the above described fourth aspect further comprising a plurality of despreading sections and path decision sections, wherein the processing by the plurality of despreading sections and decision sections is only carried out on the paths selected within the area where the window excess detection section has detected that delay spreading exceeds the detection window out of the paths selected by the path selection section and the number of the despreading sections and decision sections used is made variable according to the breadth of the area where delay spreading is detected to exceed the detection window.

According to this configuration, despreading processing and decision processing for deciding the appropriateness of the paths are only carried out on the paths selected within an area where there is a high possibility that adjacent paths may have actually leaked in and where the window excess detection section has detected that delay spreading exceeds the detection window width, and therefore it is possible to efficiently remove the mistakenly selected paths with a small amount of processing. Moreover, the number of the despreading sections and decision sections is made variable according to the breadth of the area where delay spreading is detected to exceed the detection window, and therefore it is possible to use more despreading sections and decision sections to decide paths appropriately as the number of paths existing in this area increases and increase the number of paths that can be detected.

A communication terminal apparatus according to a tenth aspect of the present invention comprises the path detection apparatus according to any one of the above described first to ninth aspects and an interference cancellation section that removes signals directed to other stations from the received signal as interference components based on path information of signals directed to the own station and other stations detected by the path detection apparatus.

According to this configuration, even if delay spreading exceeds the detection window width, the interference cancellation section can remove the interference components usingpath information on signals directed to the respective communication terminals exactly detected by the path detection apparatus, and therefore it is possible to obtain signals of high quality directed to the own station.

An eleventh aspect of the present invention is a path detection method for detecting paths of signals directed to the own station and other stations based on midamble signals when signals including the midamble signals obtained by simultaneously multiplexing a plurality of midamble codes specific to respective communication terminals formed by cyclically shifting a cell-specific basic midamble code by an unit shift amount are received from a radio base station, wherein when a correlation between the plurality of midamble signals included in the received signal and the cell-specific basic midamble code provided beforehand is found, the range of path selection or the way of path selection is adaptively set according to delay spreading of paths of the received signal in selecting paths of signals directed to the own station and other stations based on the delay profiles of signals directed to the own station and other stations appearing in time sequence.

According to this method, when delay spreading exceeds the detection window width, it is possible to prevent peaks of a signal directed to a communication terminal not to be detected within the detection window which have leaked into the adjacent detection window from being mistakenly selected as paths of signals directed to communication terminals to be detected within the detection window. As a result, it is possible to exactly detect paths of signals directed to the respective communication terminals.

A reception apparatus according to a twelfth aspect of the present invention comprises a band restriction section that restricts the band of a received signal using a reception filter, a correlation calculation section that performs a correlation calculation with midambles included in the received signal while cyclically shifting a basic midamble code by a predetermined amount at a time, a delay profile creation section that creates continuous delay profiles for every midamble shift based on the calculation result of the correlation calculation, a distortion component creation section that creates start path distortion components appearing before the start sample of a delay profile about each midamble shift caused by the characteristic of the reception filter for every midamble shift, a removing section that removes the start path distortion component of the delay profile of the following midamble shift in delay profiles of midamble shifts adjacent to each other from the rear part of the delay profile of the preceding midamble shift, a path selection section that selects paths using the delay profile whose start path distortion component has been removed and a demodulation section that demodulates the received signal using the paths selected by the path selection section for every midamble shift.

According to this configuration, when the start path distortion components of the delay profile of the following midamble shift are included behind the delay profile of each midamble shift, paths are selected after removing these start path distortion components, and therefore it is possible to prevent erroneous detection of paths caused by the characteristic of the reception filter and demodulate the received signal without causing deterioration of the characteristic consequently.

A reception apparatus according to a thirteenth aspect of the present invention has a configuration wherein the distortion component creation section according to the above described twelfth aspect multiplies the power value of the start sample by a coefficient of the reception filter to thereby create the start path distortion components corresponding to a predetermined number of samples whose power value tends to decrease in the forward direction with the start sample as a peak power value.

According to this configuration, the start path distortion components are created by multiplying the power value of the start sample of the following midamble shift by a coefficient of the reception filter, and therefore it is possible to create the start path distortion components which exactly reflect the characteristic of the reception filter and more reliably remove the start path distortion components caused by the characteristic of the reception filter consequently.

A base station apparatus according to a fourteenth aspect of the present invention comprises the reception apparatus according to the above described twelfth and thirteenth aspects.

A communication terminal apparatus according to a fifteenth aspect of the present invention comprises the reception apparatus according to the above described twelfth and thirteenth aspects.

A sixteenth aspect of the present invention comprises a step of restricting the band of a received signal using a reception filter, a step of performing a correlation calculation with midambles included in the received signal while cyclically shifting a basic midamble code by a predetermined amount at a time, a step of creating continuous delay profiles for every midamble shift based on the calculation result of the correlation calculation, a step of creating start path distortion components appearing before the start sample of the delay profile about each midamble shift caused by the characteristic of the reception filter for everymidamble shift, a step of removing the start path distortion components of the delay profile of the following midamble shift in delay profiles of midamble shifts adjacent to each other from the rear part of the delay profile of the preceding midamble shift, a step of selecting paths using the delay profile whose start path distortion components have been removed and a step of demodulating the received signal using the selected paths for every midamble shift.

According to this method, paths are selected after removing the start path distortion components of the delay profile of the following midamble shift appearing behind the delay profile of each midamble shift, and therefore it is possible to prevent erroneous detection of paths caused by the characteristic of the reception filter and demodulate the received signal without causing deterioration of the characteristic consequently.

As described above, the present invention selects paths after removing the start path distortion components of the delay profile of the following midamble shift appearing behind the delay profile of each midamble shift, and can thereby exactly detect paths of signals about the respective communication terminals from the received midamble signals and improve the reception characteristic.

This application is based on the Japanese Patent Application No.2002-149740 filed on May 23, 2002 and the Japanese Patent Application No.2002-260851 filed on September 6, 2002, entire content of which is expressly incorporated by reference herein.

### Industrial Applicability

The present invention is applicable to a communication terminal apparatus such as a cellular phone and its base station, etc.

## Claims

1. A reception apparatus comprising:
a band restriction section that restricts the band of a received signal using a reception filter;
a correlation calculation section that performs a correlation calculation with midambles included in the received signal while cyclically shifting a basic midamble code by a predetermined amount at a time;
a delay profile creation section that creates continuous delay profiles for every midamble shift based on the calculation result of the correlation calculation;
a distortion component creation section that creates start path distortioncomponentsappearing before the start sample of a delay profile about each midamble shift caused by the characteristic of said reception filter for every midamble shift;
a removing section that removes said start path distortion components of the delay profile of the following midamble shift in delay profiles of midamble shifts adjacent to each other from the rear part of the delay profile of the preceding midamble shift;
a path selection section that selects paths using the delay profile whose start path distortion components have been removed; and
a demodulation section that demodulates the received signal using the paths selected by said path selection section for every midamble shift.

2. The reception apparatus according to claim 1, wherein said distortion component creation section multiplies the power value of said start sample by a coefficient of said reception filter to thereby create said start path distortion components corresponding to a predetermined number of samples whose power value tends to decrease in the forward direction with said start sample as a peak power value.

3. A base station apparatus comprising the reception apparatus according to claim 1.

4. A communication terminal apparatus comprising the reception apparatus according to claim 1.

5. A reception method comprising:
a step of restricting the band of a received signal using a reception filter;
a step of performing a correlation calculation with midambles included in the received signal while cyclically shifting a basic midamble code by a predetermined amount at a time;
a step of creating continuous delay profiles for every midamble shift based on the calculation result of the correlation calculation;
a step of creating start path distortion components appearing before the start sample of the delay profile about each midamble shift caused by the characteristic of said reception filter for every midamble shift;
a step of removing the start path distortion components of the delay profile of the following midamble shift in delay profiles of midamble shifts adjacent to each other from the rear part of the delay profile of the preceding midamble shift;
a step of selecting paths using the delay profile whose start path distortion components have been removed; and
a step of demodulating the received signal using the selected paths for every midamble shift.
